# EUROPEAN PATENT SPECIFICATION

(11) **EP 1 423 011 B1**
(45) Date of publication and mention of the grant of the patent: **06.12.2006**
(21) Application number: 02743541.1
(22) Date of filing: 04.07.2002
(51) Int. Cl.: A01N 63/00

(54) **A BIOINOCULANT COMPOSITION COMPRISING BACTERIAL STRAINS OF B.SUBTILIS OR B.LENTIMORBUS FROM COW'S MILK**
BIOIMPFUNGSZUSAMMENSETZUNG ENTHALTEND BAKTERIEN DER ARTEN B.SUBTILIS ODER B.LENTIMORBUS VON KUHMILCH
COMPOSITION BIOINOCULANTE CONTENANT DES SOUCHES BACTERIENNES DE B. SUBTILIS OU DE B. LENTIMORBUS PROVENANT DU LAIT DE VACHE

(30) Priority: 04.09.2001 US 316283 P
(43) Date of publication of application: 02.06.2004
(73) Proprietor: COUNCIL OF SCIENTIFIC AND INDUSTRIAL RESEARCH, New Delhi 110 001 (IN)
(72) Inventor: NAUTIYAL, Ch. S. National Botanical Research Inst., 226 001 Luchnow (IN); MEHTA, Sangeeta National Botanical Research Inst., 226 001 Lucknow (IN); SINGH, H. B. National Botanical Research Institute, 226 001 Luchnow (IN); PUSHPANGADAN, P. National Botanical Research Inst., 226 001 Lucknow (IN)
(74) Representative: Benson, John Everett
(86) International application number: PCT/IB2002/002767
(87) International publication number: WO 2003/020038

(56) References cited:
- EP-A- 0 276 132
- WO-A-00/49875
- WO-A-98/21964
- US-A- 2 258 319
- US-A- 6 060 051
- BETTIOL WAGNER: "Effectiveness of cow's milk against zucchini squash powdery mildew (Sphaerotheca fuliginea) in greenhouse conditions." CROP PROTECTION, vol. 18, no. 8, 1999, pages 489-492, XP001106770 ISSN: 0261-2194

## Description

### Technical Field

The present invention relates to a synergistic composition useful as bioinoculant, said composition comprising bacterial strains of accession Nos. NRRL B-30486, NRRL B-30487, and NRRL-B 30488, individually or in all possible combinations, and optionally carrier, with each of the strains showing plant promotery activity, phytopathogenic fungi controlling activity, abiotic stress conditions tolerating capability, phosphate solubilization capability under abiotic stress conditions; further, a method of producing said composition thereof, and in addition, a method of isolating said bacterial strains from cow `Sahiwal'.

### Background Art

The microbial world is a microcosm whose activities are of central importance to the biosphere. Microbial products contribute to environment, plant, public, and soil health. There is a striking diversity of microorganisms in their ecological and physiological specialization. They have evolved to cope with and flourish in almost every niche, no matter how inhospitable. Microorganisms also form a range of associations with other microbes and with other plants and animals. They can be pathogens, parasites, symbionts, commensales and saprophytes, and thus, their ecological influence infiltrates into all trophic levels of life and gamut of possible ecosystems. Microbes have proved to be an exceptionally rich source of new products, and there is every indication that they will continue to be so in the future. Therefore, exploration of biodiversity for novel microbes that are of ecologically significance or are of economic value is of importance. This has prompted microbiologists to continue to search for novel useful microbes from sources that remain uncharacterized.

According to Hindu mythology as well as the Indian traditional medical practices (both the classical systems like Ayurveda and Siddha and the oral practices of the rural villagers) cow's milk has rejuvenatory health protecting and health promotery properties and hence has been said as the best one among vitalisers [Caraka-Samhita, Editor-translator P. Sharma, Chaukhambha Orientalia, Varanasi, India, volume 1, p. 213 (1981); P. Pushpangadan, Ethnobiology in India: A status report, Ministry of Environment and Forests, Government of India, New Delhi (1994); P. Pushpangadan, All India Coordinated research project on ethnobiology : Final technical report 1982-1998, Ministry of Environment and Forests, Government of India, New Delhi (1998)].

Milk may be defined as the normal secretion of the mammary gland of the mammals. Milk as it is secreted by the gland of the mammals is free of microorganisms. However, microorganisms associated with the teat move up the teat canal and into the interior of the udder [J. C. Olsen and G. Mocquot. Milk and milk products. In: International commission on microbiological specifications for foods. Microbial ecology of foods. Food commodities. Vol. 2. New York: Academic Press (1980) pp. 470-486]. This causes even aseptically drawn milk to contain microorganisms, mostly bacteria. Bacteria in aseptically drawn milk are usually limited in number and include mostly micrococci, lactococci, staphylococci, streptococci, and bacillus [F. L. Bryan, Journal of Food Protection, Volume 46, pp. 637-649 (1983); R. A. Ledford. Raw milk and fluid milk products. In: Applied dairy microbiology. Eds. E. H. Marth and J. L. Steele, New York : Marcel Deldcer, Inc. (1998) pp. 55-64]. Wagner Bettiol [Crop Protection 1999, 18: 489-492] reported the use of cow's milk to control powdery mildew on zucchini squash growing in greenhouses.

It has been known for the past more than four decades that many of the bacteria that occur commonly in milk find it a relatively unfavorable medium and it would thus appear that milk has pronounced selective properties [T. Gibson and Y. A. Abd-El-Malek, Canadian Journal of Microbiology, Volume 3, pp. 203-213, (1957)]. Thus the bacterial flora that has invaded in the teat and/or udder must have the persistence ability for survival and multiplication, under these sub optimal conditions. Therefore, work on the milk described in this application pertains to bacterial flora persisting in the teat and/or udder, which have gained entrance into the aseptically drawn milk, in our attempt to search for novel microbes, from an ecological niche that remain uncharacterized.

Improving soil fertility is one of the most common tactics to increase agricultural and forest production. We have isolated plant beneficial bacteria from cow milk. Inoculation of seeds or soil with beneficial microorganisms for crop improvement has been practiced for a number of years. A variety of mechanisms have been identified as being responsible for such plant growth promoting activity. For example, certain microorganisms indirectly promote plant growth by inhibiting the growth of deleterious microorganisms; or directly enhance plant growth by producing growth hormones; and/or by assisting in the uptake of nutrients by the crops, e.g., phosphorus (P) [C. S. Nautiyal et al., FEMS Microbiology Letters, Volume 182, pp. 291-296 (2000)].

However, a major factor in the unsuccessful commercialisation of bioinoculants has been the inconsistency of field test results as their establishment and performance are severely effected by environmental factors especially under stress conditions encountered in soil e.g., salt, pH, and temperature [C. S. Nautiyal et al. , FEMS Microbiology Letters, Volume 182, pp. 291-296 (2000)]. Therefore, it would be desirable to provide stress tolerant bacterial strains as bioinoculants [C. S. Nautiyal, Biocontrol of plant diseases for agricultural sustainability. In: Biocontrol potential and its exploitation in sustainable agriculture. Volume 1, Eds. R. K. Upahyay, K. G. Mukerji, and B. P. Chamola, Kluwer Academic/Plenum Publishers, New York (2000) pp. 9-23]. Plant growth promoting microorganisms include but are not limited to *Rhizobium, Pseudomonas, Azospirillum,* and *Bacillus* etc. [A. K. Saxena et. al. , Bacterial biocontrol agents and their role in plant disease management. In: Biocontrol potential and its exploitation in sustainable agriculture. Volume 1, Eds. R. K. Upadhyay, K. G. Mukerji, and B. P. Chamola, Kluwer Academic/Plenum Publishers, New York (2000) pp.25-37].

Usefulness of *B. subtilis* as a source of antagonist for plant pathogenic fungus *Sclerotium rolfsii* is well known [P. Broadbent et al; Australian Journal of Biological Sciences, Volume 24, pp. 975 (1971)]. Baker et al. [Phytopathology, Volume 73, 1148 1152 (1983)] also report on use of *B. subtilis* as biocontrol agent of fungal plant pathogens. Pusey et al. [Plant Disease, Volume 72, pp. 622-626 (1988)] and P. L. Pusey [United States Patent number 5,047, 239] disclosed control of post harvest fruit rot using *B. subtilis.* S. D. Heins et al. [United States Patent number 6103, 228] have disclosed methods of protecting or treating plants from fungal and bacterial infections and corn rootworm infestations using *B. subtilis.* EP 0 276 132 discloses *B. subtilis* strains NCIB 12375, NCIB 12376 and NCIB 12616 as having antimicrobial activity. WO 00/49875 discloses *B. subtilis* strains FERM BP-1738 and FERM BP-1739 and WO 98/21964 discloses *B. subtilis* strain ATCC 55614, all three of which are suggested for the treatment of plants against fungal and bacterial infections. US 6,060,051 discloses *B*. *subtilis* strain NRRL B21661 as having insecticidal, antifungal and antibacterial activity.

*B. lentimorbus* is causative agent of milky disease in Japanese beetle and related scarab larvae [K. E. Rippere et al. International Journal of Systematic Bacteriology, Volume 48, pp. 395-402 (1998)], and therefore used for the biocontrol of larvae of certain insects [R. E. Gordon et al., The genus *Bacillus,* Agriculture handbook no. 427, United States Department of Agriculture, U. S. Government printing office, Washington D. C. (1973)]. US 2,258,319 reports the use of resistant stage *B. lentimorbus* or *B. popilliae* bacteria in the treatment of such milky disease in insect larvae. *B. lentimorbus* has also been used to increase the production of fish [W. T. Logan et al., United States Patent number 5,746,155] and to treat poultry litter [W. T. Logan et al., United States Patent number 6,017,525].

For propagating bacteria commonly used carrier for commercial inoculants are vermiculite, charcoal, caboxymethyl cellulose, peat, perlite, polyvinyl-pyrrolidone, and talc. Press mud, a "waste" product obtained during sugar manufacture has also been used as a carrier for *Azotobacter chroooccum* and *Rhizobium japonicum* [K.S. Jauhri, Indian Journal Agriculture Research, Volume 24, pp. 189-197 (1990)]. Press mud like any other organic manure affects the physical, chemical and biological properties of the soils. It also helps to increase water stable aggregates in soils. It can be composted with distillery spent wash and utilized as a better organic manure than press mud alone [D.P. Yadav. Recycling of sugar factory press mud in agriculture. In: Recycling of crop, animal, human, and industrial wastes in agriculture. Ed. H.L.S. Tandon, Fertilizer development and consultation organization, New Delhi (1995) pp. 91-108]. Agricultural and environmental industry would therefore clearly benefit from a simple, less expensive method of microbial inoculants for plants, seeds and soil.

While work on microbiology of the milk so far has been on psychrotrophic bacteria because of their importance in milk and dairy products [M.A. Cousin. Journal of food protection. Volume 45, pp. 172-207 (1982); R.A. Ledford. Raw milk and fluid milk products. In: Applied dairy microbiology. Eds. E.H. Martha and J.L. Steele, New York: Marcel Dekker, Inc. (1998) pp. 55-64], no bacterial strain has been previously found from the milk of cow which has the ability to control phytopathogenic fungi, promote plant growth, tolerance for abiotic stresses, and solubilize phosphate under abiotic stress conditions.

India is one of the few countries in world, which has contributed richly to the International livestock gene pool and improvement of animal population in world. Cattle and buffalo contribute nearly 15% of the gross national income. The country possesses 23% of world bovine population. Cattle, common term for the domesticated herbivorous mammals that contribute to genus Bos, of the family Bovidae. Modem cattle are divided into two species: B. taurus, which originated in Europe and includes most modem breeds of dairy and beef cattle, and B. indicus, which originated in India and is characterized by a hump and the withers. The latter are now widespread in Africa and Asia, with lesser numbers imported to North America (primarily in southern U.S.), Central America, and Northern and Central America.

Dairy cattle are those breeds that have been developed primarily to produce milk. In North America the major breeds of dairy cattle are the Holstein-Friesian, Ayrashire, Brown Swiss, and Jersey. Among the major dairy breeds of B. indicus found primarily in India are the Gir, Hariana, Red Sindhi, Tharparker, and Sahiwal. By far Sahiwal is the best breed of the subcontinent. It is comparatively a heavy breed with symmetrical body and loose skin, when compared with Red Sindhi with which it is closely resembles. The animals are usually long and fleshy and with heavier built. The colour is redish dunn or pale red, sometimes fleshed with white patches. A number of herds of this breed are maintained in India. The milk yield ranges from 1400 to 2500 kg. The heritability of this trait is 0.2 to 0.3. The age at first calving ranges from 37 to 48 months and the calving interval is from 430 to 580 days. Sahiwal is one of the most popular breeds of the subcontinent. It has been exported to Srilanka, Kenya and many countries in Latin America and West Indies where a new breed called Jamaica Hope has been evolved out of Sahiwal and Jersey crossbreeds [P.N. Bhat, Handbook of Animal Husbandry, Directorate of Publication and Information on Agriculture, Krishi Anusandhan Bhawan, Pusa, New Delhi (1997)].

Accordingly, there has been no clear indication heretofore that any bacteria isolated from cow might act as a biocontrol agent, and certainly no showing of direct, bacterial-mediated stimulation of plant growth per se. Nevertheless, a bacterial strain capable of promoting plant growth, tolerance for abiotic stresses, and solubilize phosphate under abiotic stress conditions, if one were isolated, could find immediate application, e.g., in soils affected by phytopathogens, poor nutrient availability like phosphorus, and environment stresses etc., did not result in a desired improvement in crop development, additionally, no procedure for the selection of such bacterial strain has been reported. We have found by direct comparison on a variety of plant types that the unique combination of selected bacterial strains is effective in the enhancement of plant growth and health.

The present invention relates to novel strains of bacteria isolated from cow which have the ability to control phytopathogenic fungi, promote plant growth, tolerance for abiotic stresses, solubilize phosphate under abiotic stress conditions, and a method for the selection of these strains.

### Objects of the present invention

The main object of the present invention is to isolate bacterial strains from cow, useful as bioinoculant.

Another main object of the present invention is to isolate bacterial strains from cow Sahiwal, having plant promotery activity.

Yet another object of the present invention is to isolate bacterial strains from cow Sahiwal, having plant-promoting activity of at least 5% of the dry weight.

Still another object of the present invention is to isolate bacterial stains from cow Sahiwal showing plant promotery activity in terms of less seeding mortality, better seedling germination, plant height, number of pods and seed dry weight.

Still another object of the present invention is to isolate bacterial strains from cow Sahiwal with phytopathogenic fungi controlling activity.

Still another object of the present invention is to isolate bacterial strains from cow Sahiwal with phosphate solubilization property.

Still another object of the present invention is to isolate bacterial strains from cow Sahiwal having abiotic stress condition tolerating activity.

Still another object of the present invention is to isolate bacterial strain from cow Sahiwal having 4-8% salt tolerance ability.

Still another object of the present invention is to isolate bacterial strains from cow Sahiwal having pH 4-10-tolerance ability.

Still another object of the present invention is to isolate bacterial strains from cow Sahiwal having temperature 50-60°C tolerance ability.

Still another object of the present invention is to develop a synergistic formulation comprising three strains isolated from cow Sahiwal with said composition having properties, comprising controlling phytopathogenic fungi, promoting plant growth, having tolerance for abiotic stresses, solubilizing phosphate under abiotic stress conditions, producing anti-fungal metabolites.

Still another object of the present invention is to develop a formulation comprising three strains isolated from cow Sahiwal, useful as a bioinoculant, showing maximum viability under varied storage or greenhouse or field conditions.

Still another object of the present invention is to develop a formulation comprising the three isolated strains from cow Sahiwal with accession Nos. NRRL B-30486, NRRL B-30487, and NRRL-B 30488, wherein said formulation can be in liquid or dry form to seeds, plants, and soil.

### Summary of the present invention

The present invention relates to a synergistic composition useful as bioinoculant, said composition comprising bacterial strains of accession Nos. NRRL B-30486, NRRL B-30487, and NRRL-B 30488, individually or in all possible combinations, and optionally carrier, with each of the strains showing plant promotery activity, phytopathogenic fungi controlling activity, abiotic stress conditions tolerating capability, phosphate solubilization capability under abiotic stress conditions; further, a method of producing said composition thereof, and in addition, a method of isolating said bacterial strains from cow 'Sahiwal'.

### Detailed description of the present invention

Accordingly, the present invention relates to a synergistic composition useful as bioinoculant, said composition comprising bacterial strains of accession Nos. NRRL B-30486, NRRL B-30487, and NRRL-B 30488, individually or in all possible combinations, and optionally carrier, with each of the strains showing plant promotery activity, phytopathogenic fungi controlling activity, abiotic stress conditions tolerating capability, phosphate solubilization capability under abiotic stress conditions; further, a method of producing said composition thereof, and in addition, a method of isolating said bacterial strains from cow Sahiwal'.

In an embodiment of the present invention, a synergistic composition useful as bioinoculant, said composition comprising bacterial strains of accession Nos. NRRL B-30486, NRRL B-30487, and NRRL-B 30488, individually or in all possible combinations, and optionally carrier.

In another embodiment of the present invention, wherein the strains NRRL B-30486, and NRRL B-30488 belongs to the group *Bacillus lentimorbus.*

In yet another embodiment of the present invention, wherein the strain NRRL B-30487 belongs to the group *Bacillus subtilis.*

In still another embodiment of the present invention, wherein the strain NRRL B-30486 shows characteristics as shown below:

| Characteristics | NRRL B-30486 |
|---|---|
| Shape | Rods |
| Size | |
| Width, µm | 1.5-2.0 |
| Length, µm | 3.0-6.0 |
| Gram reaction | + |
| Catalase reaction | - |
| Anaerobic growth | + |
| Voges-Proskauer | |
| Reaction | - |
| pH in V-P broth | 5.5 |
| Acid from | |
| D-glucose | + |
| L-arabinose | - |
| D-xylose | - |
| D-mannitol | - |
| Gas from glucose | + |
| Hydrolysis of | |
| Casein | - |
| Gelatin | - |
| Starch | - |
| Use of citrate | - |
| Nitrate to nitrite | - |
| Indole formation | - |
| Growth at pH | |
| in nutrient broth | |
| 6.8 | + |
| 5.7 | + |
| Growth in Nacl | |
| 2% | + |
| 5% | + |
| 7% | + |
| 10% | + |
| Growth at | |
| 30°C | + |
| 40°C | + |
| 50°C | + |
| 55°C | + |
| 65°C | - |

In still another embodiment of the present invention, wherein the strain NRRL B-30487 shows characteristics as shown below:

| Characteristics | NRRL B-30487 |
|---|---|
| Shape | Oval |
| Size | |
| Width, µm | 2.5 |
| Gram reaction | + |
| Catalase reaction | + |
| Anaerobic growth | - |
| Voges-Proskauer | |
| Reaction | + |
| pH in V-P broth | 5.8 |
| Acid from | |
| D-glucose | + |
| L-arabinose | + |
| D-xylose | + |
| D-mannitol | + |
| Gas from glucose | - |
| Hydrolysis of | |
| Casein | + |
| Gelatin | + |
| Starch | + |
| Use of citrate | + |
| Nitrate to nitrite | + |
| Indole formation | - |
| Growth at pH | |
| in nutrient broth | |
| 6.8 | + |
| 5.7 | + |
| Growth in Nacl | |
| 2% | + |
| 5% | + |
| 7% | - |
| 10% | - |
| Growth at | |
| 30°C | ⁺ |
| 40°C | ⁺ |
| 50°C | ⁺ |
| 55°C | + |
| 65°C | - |

In still another embodiment of the present invention, wherein the strain NRRL B-30488 shows characteristics as shown below:

| Characteristics | NRRL B-30488 |
|---|---|
| Shape | Rods |
| Size | |
| Width, µm | 1.5-2.0 |
| Length, µm | 5.0-10.0 |
| Gram reaction | + |
| Catalase reaction | - |
| Anaerobic growth | + |
| Voges-Proskauer | |
| Reaction | |
| pH in V-P broth | 5.2 |
| Acid from | |
| D-glucose | + |
| L-arabinose | - |
| D-xylose | - |
| D-mannitol | - |
| Gas from glucose | + |
| Hydrolysis of | |
| Casein | - |
| Gelatin | - |
| Starch | - |
| Use of citrate | - |
| Nitrate to nitrite | - |
| Indole formation | - |
| Growth at pH | |
| in nutrient broth | |
| 6.8 | + |
| 5.7 | + |
| Growth in Nacl | |
| 2% | + |
| 5% | + |
| 7% | + |
| 10% | + |
| Growth at | |
| 30°C | + |
| 40°C | + |
| 50°C | + |
| 55°C | + |
| 65°C | - |

In still another embodiment of the present invention, wherein carrier is selected from a group comprising vermiculite, charcoal, a mixture of fermented sugar factory sulphitation press mud and distillery spent wash, and sugar factory carbonation press mud.

In still another embodiment of the present invention, wherein ratio of three strains is about 1:1:1.

In still another embodiment of the present invention, wherein total concentration of strains is 4-10cfu/g of carrier and preferably 6-8 cfu/g of carrier.

In still another embodiment of the present invention, wherein concentration of each strain is 4-10cfu/g of carrier and preferably 7-8 cfu/g of carrier.

In still another embodiment of the present invention, wherein generation time of the strains is 55-65 minutes at 30°C.

In still another embodiment of the present invention, wherein said strains colonize plant roots.

In still another embodiment of the present invention, wherein said strains survive all the seasons of the plant.

In still another embodiment of the present invention, wherein said strains survive for at least 2/3 years in the composition.

In another embodiment of the present invention, an *in vitro* method of isolating bacterial strains of accession nos. NRRL B-30486, NRRL B-30487, and NRRL-B 30488, from the milk of cow 'Sahiwal', said strains having properties, comprising controlling phytopathogenic fungi, promoting plant growth, having tolerance for abiotic stresses, solubilizing phosphate under abiotic stress conditions, producing anti-fungal metabolites. collecting milk for cow 'Sahiwal',

In yet another embodiment of the present invention, plating milk on a culture medium.

In yet another embodiment of the present invention, incubating the culture at temp of 25-35°C, for about 1-3 days.

In still another embodiment of the present invention, selecting all morphologically distinct bacteria from culture.

In still another embodiment of the present invention, screening said strains selected in previous step which will suppress phytopathogenic fungi by showing a zone of inhibition of at least 2 mm, by incubating at 30-35°C preferably 28°C, for 20-35 days, preferably 27 days.

In still another embodiment of the present invention, screening said strains selected in previous step for plant growth promotery bacteria showing at least 5% increase in dry weight of plant, by growing plants in the presence of selected bacteria in a concentration of bacteria ranging between about Log 6 to 10 CFU/seed or about Log 6 to 8 CFU/gram of soil.

In still another embodiment of the present invention, screening said strains selected in previous step at 4-8% salt stress tolerance for further selection.

In still another embodiment of the present invention, screening said strains selected in previous step at pH 4-10 stress tolerance for further selection.

In still another embodiment of the present invention, screening said strains selected in previous step at 50-60°C temperature stress tolerance for further selection.

In still another embodiment of the present invention, screening said strains selected in previous step for ability to solubilize phosphate under abiotic stress conditions of high salt, pH, and temperature for further selection.

In still another embodiment of the present invention, isolating the desired three bacterial strains.

In still another embodiment of the present invention, wherein plant for growth promotery activity is selected from a group comprising *Zea mays, Abelmoschus esculentus, Luffa cylindrica., Lycopersicon esculentum, Abelmoschus esculentus,* and *Cucumis sativus.*

In still another embodiment of the present invention, wherein culture medium is Nutrient Agar, said medium comprising beef extract (2-10gms), peptone (5-15 gms), sodium chloride (2-10 gms), agar (10-20 gms), distilled water (about 1:0 L), with pH ranging between 7.0-7.4.

In still another embodiment of the present invention, wherein pH tolerance is tested at 30°C.

In still another embodiment of the present invention, wherein soil moisture is ranging between 15-30%, preferably 20%.

In still another embodiment of the present invention, wherein salt is preferably NaCl.

In still another embodiment of the present invention, wherein the strains are grown on Nutrient Broth (NB) medium consisting of Beef extract (0.5%), peptone (1%), NaCl (0.5%), and distilled water, with pH of the medium is 7.2.

In still another embodiment of the present invention, wherein pathogenic fungus are selected from a group comprising *F*. *moniliforme, C. falcatum, F. oxysporum* f. sp. *ciceri, R. solani, Pythium* sp., Phoma sorghii, Sclerotium rolfsii, altemaria solani, curvularia lunata, sclerotinia sclerotiorum, and aspergillus niger.

In still another embodiment of the present invention, wherein concentration of the strains is ranging between 4-10 CFU/ml.

In still another embodiment of the present invention, wherein phosphate solubilization increases by about 428% upon a combined increase of temperature, salt, and pH.

In still another embodiment of the present invention, wherein phosphate solubilization increases by about 160% with increase in salt concentration.

In still another embodiment of the present invention, wherein phosphate solubilization increases by about 130% with increase in pH.

In still another embodiment of the present invention, wherein strains are selected for high pH stress tolerance at preferably pH 9.

In still another embodiment of the present invention, wherein strains are selected for 55°C temperature stress tolerance.

In still another embodiment of the present invention, wherein selecting bacteria demonstrating best results in terms of less seedling mortality, and better seedling germination, plant height, number of pods and seed dry weight.

In still another embodiment of the present invention, wherein plant promotery activity goes up by 3-400%.

In still another embodiment of the present invention, wherein concentration of fungi is ranging between 4-7 spores/ml of culture medium.

In still another embodiment of the present invention, wherein abiotic stress conditions for solubilization of phosphate are selected from a group of conditions comprising high pH ranging between 7-9, high temp ranging between 30-45, and salt concentration ranging between 0.1-4%.

In another embodiment of the present invention, a method of preparing plant growth promotery formulation comprising bacterial strains of accession Nos. NRRL B-30486, NRRL B-30487, and NRRL-B 30488, individually or in all possible combinations, and carrier.

In yet another embodiment of the present invention, growing bacteria in a culture, individually to a concentration of about Log 8 to 11 cfu/ml, preferably log 9 to 10 cfu/ml, optionally followed by mixing the cultures in equal ratio in case of preparing a consortium.

In still another embodiment of the present invention, diluting the said culture with water in the ratio of 1:50 to 1:150, preferably 1:100, containing approximately Log 8-9 cfu/ml of bacteria.

In still another embodiment of the present invention, spraying about 1-3 liter of the culture/ton of freshly homogenized carrier preferably 2 liter of the culture/ton of freshly homogenized carrier and mixing.

In still another embodiment of the present invention, churning the windrows daily at least twice a day for about 2 days, to increase the temperature of the windrows up to 70-75°C.

In still another embodiment of the present invention, spraying spent wash or water into the churning windrow for about 40 days to maintain moisture level of about 55-65%.

In still another embodiment of the present invention, churning the windrows further for another 3-5 days, now to reduce the moisture and temperature of the fermented product to about 30% and 40-45°C.

In still another embodiment of the present invention, packaging plant growth promoting bioinoculant ready for its application.

In still another embodiment of the present invention, wherein carrier is selected from a group comprising fresh sulphinated press mud and carbonation press mud.

In still another embodiment of the present invention, wherein culture medium is NB medium.

In still another embodiment of the present invention, wherein homogenizing the mixture manually and by using an aero tiller.

In still another embodiment of the present invention, wherein said formulation demonstrating maximum viability, under varied storage or greenhouse or field condition.

In still another embodiment of the present invention, wherein ratio of the said strains is about 1:1:1.

In still another embodiment of the present invention, wherein using said formulation on plants, seeds, and soil.

In still another embodiment of the present invention, a method of using plant growth promotery formulation comprising bacterial strains of accession Nos. NRRL B-30486, NRRL B-30487, and NRRL-B 30488, individually or in all possible combinations, and carrier, said method comprising steps of applying the said bioinoculant in a liquid or dry form to seeds, plants, and soil.

In still another embodiment of the present invention, wherein the said bioinoculant also containing the gums or sugars to improve adhesion.

In still another embodiment of the present invention, wherein the strains are in the ratio of 1:1:1.

In still another embodiment of the present invention, wherein the said formulation demonstrates maximum viability, under varied storage or greenhouse or field condition.

In still another embodiment of the present invention, wherein the carrier is selected from a group comprising fresh sulphinated press mud and carbonation press mud.

In still another embodiment of the present invention, wherein the plants of the variety to be tested for plant growth promotion in the field in the presence of bacteria in a concentration of about Log 7-9 cfu/seed or about Log 6-8 cfu/gram of soil.

In still another embodiment of the present invention, wherein using formulation alone or in combination with other chemicals which is harmless to the growth and survival of bacteria.

In still another embodiment of the present invention, wherein the chemicals are selected from a group comprising pesticides, fertilizers, nematicides, and herbicides, with or without for example lime pelleting to limit the severity of the effect of these materials.

In still another embodiment of the present invention, the method of making a composition useful as bioinoculant, said composition comprising one or more of novel bacterial strains of accession Nos. NRRL B-30486, NRRL B-30487, and NRRL-B 30488 and a carrier.

In still another embodiment of the present invention, culturing said bacterial strains in a growth medium to log phase.

In still another embodiment of the present invention, diluting the said culture with water in the ratio ranging between 1:10 to 1:100000, with preferable ratio of 1:100.

In still another embodiment of the present invention, mixing the said diluted culture with an inert powdered carrier, with the moisture level of the mixture ranging between 20-40 %, preferably about 30% on a wet basis.

In still another embodiment of the present invention, incubating the said mixture for at least about two days, maintaining constant moisture level in said mixture.

In still another embodiment of the present invention, increasing the bacteria count in the said mixture to a range of about log 4-10 CFU/g of carrier.

In still another embodiment of the present invention, monitoring the survival rate of the bacteria over the period of at least one year in the said composition, wherein the bacterial strains are present preferably in a range from about Log 7 to 9 CFU/g of carrier, showing long survival rate of microbes as inoculate.

In still another embodiment of the present invention, wherein carrier is selected from a group comprising vermiculite, charcoal, a mixture of fermented sugar factory sulphitation press mud and distillery spent wash, and sugar factory carbonation press mud, rice husk, carboxymethyl cellulose, peat, perlite, talc, and polyvinyl pyrrolidone.

In still another embodiment of the present invention, wherein preferred carriers are selected from a group comprising vermiculite, charcoal, and fermented press mud.

In still another embodiment of the present invention, wherein bacterial count is most preferably about Log 8 CFU/g of carrier.

In still another embodiment of the present inv.ention, wherein plants for growth promotion are selected from a group comprising chickpea, *A. esculentus,* and *C. sativus,* and *Z. mays,* and *Triticum aestivum,* and *Glycine max,* and *Pisum sativum,* and *Impatiens balsamina.*

In still another embodiment of the present invention, wherein ratio of strains is about 1:1:1, in case of a consortium.

In still another embodiment of the present invention, wherein growth medium is NB medium.

In still another embodiment of the present invention, wherein growing bacteria individually to a concentration of about Log 9 to 10 CFU/ml followed by mixing the cultures in the ratio of about 1:1:1.

In still another embodiment of the present invention; wherein diluting the culture with water preferably in the ratio of 1:10, containing approximately Log 8-9 cfu/ml.

In still another embodiment of the present invention, wherein moisture of the product is regulated with windrows.

In still another embodiment of the present invention, Applicants have discovered a novel method for screening bacteria to select those bacterial strains that have the ability to control phytopathogenic fungi, promote plant growth, tolerance for abiotic stresses, and solubilize phosphate under abiotic stress conditions. When used as bioinoculants, the novel bacteria obtained by our method have the ability to control phytopathogenic fungi and promote plant growth under field conditions.

Applicants have also discovered three novel strains of *Bacillus*, when used individually or as a novel blend of consortium which provides a unique synergism, which have the ability to control phytopathogenic fungi under field conditions, promote plant growth under field conditions, tolerance for abiotic stresses, and solubilize phosphate under abiotic stress conditions.

### Screening method comprises:

1. Isolating strains of bacteria from milk and selecting the bacteria having potential for suppressing growth of phytopathogenic fungi *Colletotrichum falcatum, Sclerotium rolfsii, Alternaria solani, Penicillium* sp., *Pythium aphanidermatum, Phytophthora palmivora, Curvularia lunata, Sclerotinia sclerotiorum,* and *Aspergillus niger,* under *in vitro* conditions on nutrient agar plates (NA) by streaking one to four single bacterial colonies around the edge of a 90-mnn diameter petri plate and incubating it at 28°C for two day; transferring an agar plug inoculum of the fungi (5-mm square) to the centre of the plate individually from a source plate of fungi to be tested on NA for 2 to 7 days; and selecting the bacterial strains having the biocontrol activity which inhibited fungal growth.
2. Screening of bacteria selected in step 1 in the greenhouse having potential for suppressing growth of pathogenic fungi under *in vitro* conditions, for plant growth promotery bacteria as follows: growing maize plants in the presence of bacteria selected in step 1 in the greenhouse in a concentration of about Log 8 colony forming units (cfu)/seed in non-sterile soil; growing control maize plants as above but without addition of the bacteria; and selecting as plant growth promotery bacteria those strains which cause the treated plants to exhibit greater dry weight.
3. Screening of bacteria selected in step 2 as plant growth promoters for abiotic stress (salt, pH, and temperature) tolerance under *in vitro* conditions as follows: selecting as stress tolerant bacteria those strains selected in step 2 which exhibit tolerance to 6% salt (NaCl), 5-9 pH, and 55°C temperature.
4. Characterization of bacteria selected in step 3 tolerant for abiotic stress for ability to solubilize phosphate under abiotic stress (salt, pH, and temperature) conditions as follows: quantitative estimation of phosphate solubilization in broth using National Botanical Research Institute's phosphate growth medium (NBRIP); elucidating effect of salt (NaCl), pH, and temperature on solubilization of phosphate by growing the strains on NBRIP containing various amounts of NaCl (w/v), pH, and temperature as indicated; inoculating NBRIP medium with the bacterial strain with approximately Log 9 cfu/ml; autoclaved uninoculated medium served as controls.
5. Screening of bacteria selected in step 3 tolerant for survival in carriers, for its commercial use as bioinoculant, as follows: culturing the bacteria in a growth media; adding log-phase cells to various carriers, particularly such as vermiculite, charcoal, and fermented press mud; thereafter applying the inoculum to seeds (e.g., by preparing a slurry containing the carrier/bacteria mixture and gums or sugars to improve adhesion) or by directly applying to soil or, by dripping carrier/bacteria suspensions into planting furrows or by mixing with other planting material; using the formulation demonstrating maximum viability (under varied storage or greenhouse or field condition) for plants, seeds, and soil.
6. Field trial of bacteria selected in step 3 tolerant for abiotic stress for ability to control plant pathogens, particularly fungi, such as *Fusarium oxysporum* f. sp. *ciceri* i.e., reduce incidence or severity of the disease on field grown chickpea and for ability to control plant pathogens, particularly fungi, such as *Fusarium moniliforme* and *Colletotrichum falcatum* on field grown sugarcane, using various carriers such as vermiculite.
7. Field trial of bacteria selected in step 3 tolerant for abiotic stress for ability to promote plant growth of field grown plants such as sugarcane, using various carriers such as vermiculite and fermented press mud.

The bacterial strains selected by the above process have the ability to control phytopathogenic fungi, promote plant growth, tolerance for abiotic stresses, and solubilise phosphate under abiotic stress conditions.

In accordance with this discovery, It is an object of the invention to provide a method for selecting those strains which have the ability to control phytopathogenic fungi, promote plant growth, tolerance for abiotic stresses, and solubilise phosphate under abiotic stress conditions, using the so-selected bacterial strains.

It is also an object of the invention to provide a means for screening bacteria to select those strains that have the ability to control phytopathogenic fungi and promote plant growth under field conditions.

A further object of the invention is the provision of novel strains of *B. lentimorbus* and *B. subtilis* that have the ability to control phytopathogenic fungi, promote plant growth, tolerance for abiotic stresses, and solubilize phosphate under abiotic stress conditions.

Another object of the invention is the provision of suitable carriers for bacterial strains, in particular, novel strains of *B. lentimorbus* and *B. subtilis* selected in step 3 for survival in various carriers, for commercial production as bioinoculant for plants, seeds, and soil.

Yet another object of the invention is the provision of novel strains of *B. lentimorbus* and *B. subtilis* that have the ability to control phytopathogenic fungi under field conditions.

Still another object of the invention is the provision of novel strains of *B. lentimorbus* and *B. subtilis* that have the ability to promote plant growth under field conditions.

Other objectives and advantages of the invention will become apparent from the ensuing description. It should be understood, however, that the detailed description and the specific examples, while indicating preferred embodiments of the invention, are given by way of illustration only, since various changes and modifications within the spirit and scope of the invention will become apparent to those skilled in the art from this detailed description.

In this description, the term "bacteria from milk" is used to denote bacteria, which have gained entrance into the aseptically drawn milk, by invading the teat and/or udder and have the persistence ability for survival and multiplication, under these suboptimal conditions. Therefore, the bacteria described in this application pertain to bacterial flora persisting in the teat and/or udder represent an ecological niche that remains uncharacterized.

It has been discovered that per cent of bacterial strains showing biocontrol activity against phytopathogenic fungi was maximum in the.milk of Sahiwal cow, followed by human, Holestien cow and buffalo. From this parameter milk of Sahiwal cow was superior to human, Holestien cow and buffalo. Extensive selections from a large number of bacterial strains collected from the milk of human, Sahiwal cow, Holestien cow and buffalo have shown that some of these strains, as described below, have the ability to stimulate plant growth.

Therefore one aspect of the present invention relates to method for screening useful bacteria from the milk of human, Sahiwal cow, Holestien cow and buffalo and application thereof for promoting plant growth.

First the bacteria are isolated by standard procedures such as described in Eklund and Lankford, Laboratory manual for general microbiology [Prentice-Hall, Inc., USA (1967), pp. 21-27]. For example, serial dilutions of the milk samples are prepared and may be spread-plated on various general media. Examples of general media, which propagate a broad number of bacteria, include NA and the like. Next the NA plates are incubated for 1 to 3 days at a temperature suitable for bacterial growth, generally about 25 to 35°C. The preferred temperature for incubation of plates is 30°C.

Next, individual strains of the bacteria are subjected to a first screening for selecting bacteria having potential for suppressing phytopathogenic fungi under *in vitro* conditions as described earlier [C. S. Nautiyal, Current Microbiology, Volume 35, pp. 52-58 (1997)]. Bacterial colonies on NA plates were streaked around the edge of a 90-mm diameter petri plate and the plates were incubated at 25-35°C for 1 to 2 days. An agar plug inoculum of the fungi to be tested (5-mm square) was then transferred to the center of the plate individually from a source plate of the fungi. After incubation for 5 to 7 days inhibition zones were readily observed in the case of bacterial strains having the biocontrol activity.

Choice of time for incubation of the bacterial colonies on the plates before challenging with the pathogenic fungi to be tested and the time of incubation of the plates later on to observe the inhibition zone depends upon the rate of growth of the pathogenic fungi to be tested. For example if the fungi is fast grower e.g., *Rhizoctonia* then it is preferred that bacterial colonies on NA plates is streaked around the edge of a 90-mm diameter petri plate at least for 2 days in advance before an agar plug inoculum of the fungi to be tested is transferred to the center of the plate. On the contrary, if the fungi is slow grower e.g., *Fusarium,* then it is preferred that an agar plug inoculum of the fungi to be tested is transferred to the center of the plate and the plates are incubated for 2 to 3 days to allow sufficient time for the fungi to grow, before the bacterial colonies on NA plates is streaked around the edge of the petri plate.

Bacterial strains isolated in the previous step are screened to select those, which at a particular concentration promote plant growth under greenhouse conditions as described earlier [C. S. Nautiyal, Current Microbiology, Volume 34, pp. 12-17 (1997)]. In this test sterilized seeds of maize are grown in non-sterilized soil and inoculated with the bacterial strains, individually, at a concentration of Log 6-10 cfu/seed. The preferred concentration of inoculum is Log 8 cfu/seed. Trays (35x35 cm.) with 16 (4x4) places per tray (each space was of 7 cm. width, 10 cm. depth and 1 cm. apart from each other) have been found to be of a convenient size to grow maize and other plants for the greenhouse test. Each place was filled up to 8 cm. with non-sterilized soil. Although sterile soil or any other plant growth supporting material for example like vermiculite may also be used instead of non-sterile soil, it is preferred that non-sterile soil from the field where these bacteria are intended to be released is used in greenhouse test.

Tap water was added to each hole before planting seeds to adjust the soil to 15 to 30% moisture. Preferred soil moisture is 20%. Four bacterial-treated seeds were added per hole. The experiment in greenhouse was carried out in four different sets of 16 maize seedlings each, for non-bacterised (control) and bacterised (treated) seeds. In each set, data of 21-days-old seedlings was recorded with respect to an average dry weight of 16 plants. In order for the bacterial strain to be considered as plant growth promoter, the seedlings treated with the bacteria must have averaged at least 10% higher dry weight than comparable non-bacterised plants.

The bacterial strains thus selected were further subjected to abiotic stress tolerance by first screened for their ability to grow in nutrient broth (NB) containing 6% salt (NaCl; pH 7 and 30°C temperature), overnight (14-16 hrs) on a New Brunswick Scientific, USA, Innova Model 4230 refrigerated incubator shaker at 180 rpm. The strains tolerant to 6% salt were grown at 9 pH (6% NaCl and 30°C temperature), and finally the strains tolerant to 6% salt and pH 9 were grown at 55°C temperature. Viable cells were counted by removing samples at various times in the presence or absence of stress, as indicated. Serial dilutions of each sample were spotted (25 µl) onto NA plates, and incubated at 30°C in triplicate as described earlier [C. S. Nautiyal *et al.,* FEMS Microbiology Letters, Volume 182, pp. 291-296 (2000)]. Viable cells were counted after 2-3 days.

The 3 bacterial strains tolerant to abiotic stresses (salt, pH, and temperature) selected as above were further screened for their ability to solubilize phosphate under abiotic stress conditions. Quantitative estimation of phosphate solubilization in broth was carried out using National Botanical Research Institute's phosphate growth medium (NBRIP) as described earlier [C. S. Nautiyal, FEMS Microbiology Letters, Volume 170, pp. 265-270 (1999)].

The effect of salt (NaCl), pH, and temperature on solubilisation of phosphate was tested by growing them on NBRIP in the presence of NaCl, pH, and temperature, as mated using the Fiske and Subbarow method [C.H. Fiske and Y. Subbarow, Journal of Biological Chemistry, Volume 66, pp. 375-400 (1925)].

The subject strains *Bacillus lentimorbus* NBRI0725, *Bacillus subtilis* NBRI1205, and *Bacillus lentimorbus* NBRI3009 have the taxonomic characteristics listed in Table 1, as compared to those of prior art strains *of B. lentimorbus* and *B. subtilis.*

Comparison of biochemical and physical characteristics of *B. lentimorbus* NBRI0725 (invention), *B. lentimorbus* NBRI3009 (invention), *B. lentimorbus* (descriptive), *B. subtilis* NBRI1205 (invention), and *B. subtilis* (descriptive).

| | *Bacillus lentimorbus* | | | *Bacillus subtilis* | |
|---|---|---|---|---|---|
| | NBRI 0725 | NBRI Descriptive* 3009 | | NBRI Descriptive 1205 | |
| Characteristics | Invention | Invention | | Invention | |
| Shape | Rods | Rods | Rods | Oval | Rods |
| Size | | | | | |
| Width, µm | 1.5-2.0 | 1.5-2.0 | 0.5-0.7 | 2.5 | 0.7-0.8 |
| Length, µm | 3.0-6.0 | 5.0-10.0 | 1.8-7.0 | 2.0-3.0 | |
| Gram reaction | + | + | + | + | + |
| Catalase reaction | - | - | - | + | + |
| Anaerobic growth | + | + | + | - | - |
| Voges-Proskauer | | | | | |
| Reaction | - | - | - | + | + |
| pH in V-P broth | 5.5 | 5.2 | 5.9-6.9 | 5.8 | 5.0-8.0 |
| Acid from | | | | | |
| D-glucose | + | + | + | + | + |
| L-arabinose | - | - | - | + | + |
| D-xylose | - | - | - | + | + |
| D-mannitol | - | - | - | + | + |
| Gas from glucose | + | + | + | - | - |
| Hydrolysis of | | | | | |
| Casein | - | - | - | + | + |
| Gelatin | - | - | - | + | + |
| Starch | - | - | - | + | + |
| Use of citrate | - | - | - | + | + |
| Nitrate to nitrite | - | - | - | + | + |
| Indole formation | - | - | - | - | - |
| Growth at pH | | | | | |
| in nutrient broth | | | | | |
| 6.8 | + | + | - | + | + |
| 5.7 | + | + | - | + | + |
| Growth in Nacl | | | | | |
| 2% | + | + | - | + | + |
| 5% | + | + | - | + | + |
| 7% | + | + | - | - | + |
| 10% | + | + | - | - | ND |
| Growth at | | | | | |
| 30°C | + | + | + | + | + |
| 40°C | + | + | - | + | + |
| 50°C | + | + | - | + | + |
| 55°C | + | + | - | + | + |
| 65°C | - | - | - | - | - |

| | | | | | |
|---|---|---|---|---|---|
| *= As described in: R.E. Gordon et al., The genus *Bacillus,* Agriculture handbook no. 427, United States Department of Agriculture, U.S. Government printing office, Washington D.C. (1973; ND= No data available. | | | | | |

The 3 strains *B. lentimorbus* NBRI0725, *B. subtilis* NBRI1205, and *B. lentimorbus* NBRI3009 isolated from Sahiwal cow selected by the method of screening as described above have the ability to control phytopathogenic fungi, promote plant growth, tolerance for abiotic stresses, and solubilize phosphate under abiotic stress conditions. *B*. *lentimorbus* NBRI0725, *B. subtilis* NBRI1205, and *B. lentimorbus* NBRI3009 have been deposited under the Budapest treaty on 5^{th} of July, 2001 into ARS Patent culture collection, United States Department of Agriculture, 1815 North University Street, Peoria, Illinois 61604, U.S.A. The bacterial strains *B. lentimorbus* NBRI0725, *B. subtilis* NBRI1205, and *B. lentimorbus* NBRI3009 have been allotted following NRRL number *B. lentimorbus* NRRL B-30486, *B. subtilis* NRRL B-30487, and *B. lentimorbus* NRRL B-30488, respectively.

In addition to the other properties noted above, the unexpected and surprising attributes of these specific *B. lentimorbus* and *B. subtilis* strains include the following characteristics. All the three strains have been isolated from the milk of Sahiwal cow. The strains have a rapid generation time in culture (55-65 minutes at 30°C). In pure culture the strains inhibit the growth of many pathogenic fungi of plants. The strains are capable of colonizing plant roots. These bacteria reduce the plant disease in soil both under greenhouse and field conditions. The strains of the present invention are capable of promoting plant growth of plants in soil both under greenhouse and field conditions. Moreover the strains continue to survive in the soil throughout the growing season of the plant.

The subject *Bacillus* strains also has tolerance to abiotic stresses like 6% salt (NaCl), 5-9 pH, and 55°C temperature.

The subject *Bacillus* strains have the ability to solubilize phosphate under abiotic stress conditions e.g., 0-4% salt (NaCl), 7-9 pH, and 30-45°C temperature. Phosphate solubilization activity of the strains is induced in the presence of high salt, high pH, and high temperature.

It is within the compass of the invention to isolate any type of bacteria having the ability to control phytopathogenic fungi, promote plant growth, tolerance for abiotic stresses, and solubilize phosphate under abiotic stress conditions, however, *Bacillus* are the bacteria of choice because (1) they can easily be isolated, cultured and identified; (2) being a naturally occurring isolate or strain does not require genetic engineering to be effective; (3) being nutritionally versatile are able to utilize large number of organic substrates, including root exudates; (4) being suppressive to one or more pathogenic fungi; (5) having a stage in its life cycle that is resistant to harsh environmental conditions; (6) being tolerant to abiotic stresses (high salt, high pH, and high temperature); (7) being able to solubilize phosphate under abiotic stress (high salt, high pH, and high temperature) conditions; (8) colonizing the rhizosphere of the root system of the host plant(s) for the full growing season in the field; (9) enhancing the yield of the host plant(s) under field conditions; and (10) being relatively easy to develop for commercial purposes.

Another aspect of the invention is directed to a method of controlling plant diseases and promoting plant growth of plants in soil both under greenhouse and field conditions. The 3 bacterial strains designated *B. lentimorbus* NRRL B-30486, *B. subtilis* NRRL B-30487, and *B. lentimorbus* NRRL B-30488 are especially preferred in this process. An inoculant of the subject strain is used such that colonization is in the range of about Log 4-10 colony forming units/gram (cfu/g) root occurs and preferably Log 6-8 cfu/g. A mixture of the 3 strains (consortium) designated *B. lentimorbus* NRRL B-30486, *B. subtilis* NRRL B-30487, and *B. lentimorbus* NRRL B-30488 in the ratio of 1:1:1, consisting of about Log 6-10 cfu/ml each and preferably Log 7-8 cfu/ml each is especially preferred in this process.

The inoculum can be applied directly to the seeds or plants, can be present in the soil before planting or can be distributed, e.g., by spreading, dusting or the like, over the crop or soil top or in soil furrow where the crop has been planted.

Seeds can be treated by coating with a composition containing the subject bacteria by dipping in a liquid containing these bacteria, by spraying with the liquid, or other method known in the art for applying bacteria to seeds.

According to yet another aspect of the invention cultures of *B. lentimorbus* NRRL B-30486, *B. subtilis* NRRL B-30487, and *B. lentimorbus* NRRL B-30488 may be grown individually in molasses diluted with water in the ratio of 1:1 to 1:10. However dilution of 1:5 is especially preferred in this process. The bacterial strains may be used individually, or as a consortium in the ratio of 1:1:1, consisting of about Log 6-11 cfu/ml each and preferably Log 8-9 cfu/ml each is especially preferred in this process. The consortium thus obtained may further be diluted with water in the ratio of 1:10 to 1:10000. However dilution of 1:100 is especially preferred in this process.

Growing the bacteria in molasses makes the process economically very viable. Bacteria grown in such manner may further be used to treat seeds by coating with a composition containing the subject bacteria by dipping in a liquid containing these bacteria, by spraying with the liquid, or other method known in the art for applying bacteria to seeds.

According to a further aspect the invention, the process of the invention may be used with any kind of bacteria or other microorganisms capable of surviving under abiotic stress conditions e.g., tolerance to salt, pH, and temperature. Of particular interest are bacteria, which have biocidal properties, e.g., biofungicidal, pesticidal, and other properties; promote plant growth, and solubilise phosphate under abiotic stress conditions, e.g., high salt, high pH, and high temperature that are capable of living in the soil in the presence of the plants.

The carriers that may be used to disperse the subject strains would include all those commonly used for inoculating crops and would include carriers such as rice husk, caboxymethyl cellulose, peat, perlite, polyvinyl-pyrrolidone, and talc. The bacteria in such compositions are at a level of about Log 4-10 cfu/g carrier. Carriers such as vermiculite or charcoal or fermented press mud are especially preferred in this process. The bacteria are grown in broth to the necessary amount, and then mixed with the carrier at the desired inoculum, followed by curing of the mixture by well-known methods.

According to this embodiment of the invention the optimum carrier may vary depending on the bacteria used. Any of the above compositions, liquids, powders, peat, soil, vermiculite, charcoal, fermented press mud and the like may have nutrients included therein or appropriate carrier medium such as water, oils or solid bases such as powders, peat, soil, vermiculite, charcoal, fermented press mud and any other carrier agents. However, as demonstrated by the examples below, vermiculite, charcoal, fermented press mud are preferred.

Further aspect of this invention relates to a process whereby the synergistic composition thus produced of the present invention may be used in any manner known in the art for example, including pretreatment of soil or seeds or pregerminated plant roots alone or in combination with other chemicals which is harmless to the growth and survival of bacteria for example plant growth promoting compounds, pesticides, fertilizers, nematicides, herbicides with or without for example lime pelleting to limit the severity of the effect of these materials. However, as demonstrated by the example below, compatible pesticides are preferred.

The examples given below in a nonlimiting way will make it possible to better understand the invention.

### EXAMPLE 1

### Isolation of bacterial strains from milk

Fifty bacterial representatives of the predominant morphologically distinct colonies present on the plates were selected from healthy human, indigenous (Sahiwal) cow, exotic (Holestien Frisian) cow and buffalo's three individual milk samples, each. Therefore, a total of 600 bacterial strains were collected for further screening. Human milk was collected from three mothers with breast-fed infants in the range of 6 to 12 weeks old. Milk from pure breed native Sahiwal cows #12, #217, and #249 was collected from Gajaria farm, Department of Animal Husbandry, Government of Uttar Pradesh, Lucknow. Milk from exotic breed Holestien Frisian (15/16) cows #154, #412, and #667 was collected from Indian Military Farm, Central Command Headquarters, Indian Army, Lucknow. Milk samples from buffalo were collected from local commercial dairy farm. M ilk was collected in sterile containers after taking due care to sanitise the teat and human handler. Samples of milk were collected in morning, midway from the milk stream coming out of teat directly into sterile container, without having any contact and stored in an ice box, during its transportation. Serial dilution of the milk samples was then plated within two hours of its collection on Nutrient agar (NA) plates (Beef extract 5.0 gm, peptone 10.0 gm, sodium chloride 5.0 gm, agar 15 gm, distilled water 1000 ml, pH 7.2).

Pure isolates of the individual strains were obtained of bacteria representative of the predominant morphologically distinct colonies present on the plates were selected at random and purified by sub culturing an individual strain on NA plates to obtain a pure culture. Each isolate was stored in an aqueous solution of 30% glycerol at -25°C.

Total bacterial counts from three individual milk samples collected from healthy human, Sahiwal cow, Holestien cow was Log 3 cfu/ml, compared with a log unit higher of Log 4 cfu/ml from buffalo (Table 2).

**TABLE 2**

| Parameter | Milk sample from | | | |
|---|---|---|---|---|
| | Human | Sahiwal cow | Holestien cow | Buffalo |
| Bacteria [cfu/ml] | Log 3.2 | Log 3.1 | Log 3.2 | Log 4.2 |

### EXAMPLE 2

### Screening of bacterial strains under in vitro conditions for ability to suppress pathogenic fungi and bacteria

The 600 bacterial strains, obtained by the procedure outlined in Example 1 were screened for their ability to inhibit growth of *Colletotrichum falcatum*, *Sclerotium rolfsii*, *Alternaria solani, Penicillium* sp., *Pythium aphanidermatum*, *Phytophthora palmivora, Curvularia lunata, Sclerotinia sclerotiorum,* and *Aspergillus niger* under *in vitro* conditions as follows: Four single bacterial colonies on NA plates were streaked around the edge of a 90-mm diameter petri plate and the plates were incubated at 28°C for two days. An agar plug inoculum of the fungi to be tested (5-mm square) was then transferred to the center of the plate individually from a source plate of the fungi. After incubation for 5 to 7 days inhibition zones were readily observed in the case of bacterial strains having the biocontrol activity as the fungal growth around the streak was inhibited. While in case of bacterial strains not having biocontrol activity, fungal growth around the streak was not inhibited and the fungi grew towards the edge of the plate (Table 3). Strains, which show a zone of inhibition of at least 2 mm, were selected as positive and used for further work.

**TABLE 3**

| Pathogenic fungi | % of biocontrol bacteria | | | |
|---|---|---|---|---|
| | Human | Sahiwal cow | Holestien cow | Buffalo |
| *Colletotrichum falcatum* | 0 | 17 | 0 | 8 |
| *Sclerotium rolfsii* | 0 | 8 | 0 | 0 |
| *Alternaria solani* | 8 | 8 | 8 | 8 |
| *Penicillium* sp. | 8 | 0 | 0 | 0 |
| *Pythium aphanidermatum* | 8 | 8 | 8 | 0 |
| *Phytophthora palmivora* | 8 | 8 | 8 | 0 |
| *Curvularia lunata* | 17 | 8 | 8 | 0 |
| *Sclerotinia sclerotiorum* | 0 | 17 | 8 | 0 |
| *Aspergillus niger* | 0 | 17 | 8 | 0 |

It was discovered that % of bacterial strains showing biocontrol activity against phytopathogenic fungi was maximum in Sahiwal cow, followed by human, Holestien cow and buffalo. From this parameter milk of Sahiwal cow was superior to human, Holestien cow and buffalo (Table 2). Strains, which show a zone of inhibition of at least 2 mm, were selected as positive and used for further work.

Of 600 strains tested *in vitro,* only 150 were determined to be having the biocontrol activity, according to above criteria.

### EXAMPLE 3

### Screening of bacterial strains for ability to promote plant growth in greenhouse

The 150 bacterial strains that were suppressive to pathogenic fungi *in vitro* were screened in greenhouse by growing bacteria treated maize seeds in non-sterile soil and comparing the treated maize with control maize plants grown without bacterial treatment.

The process of screening of bacterial strains for ability to promote plant growth in greenhouse of the present invention is disclosed with particular reference to the plant maize. However it should not be conferred that the process of screening of bacterial strains for ability to promote plant growth in greenhouse is restricted to this plant, as any suitable other plant may be employed.

Non-sterile field soil from the farm of National Botanical Research Institute, Lucknow was used to evaluate the plant growth promotion potential of the 150 strains in greenhouse.

Bacterial inoculum for maize seeds was prepared by scraping 48 h grown culture from plates with 10 ml of 0.85% saline water. Maize seeds were surface sterilized by gently shaking (80 R.P.M. on a reciprocal shaker at 28°C) with 70% ethanol (5 min.), 20% bleach Chlorox (10 min.), followed by three rinses in sterile water. After surface sterilization seeds were soaked in the bacterial suspension for 4h at 28°C on a reciprocal shaker at 100 R.P.M. Control seeds (non bacterised) were soaked in 0.85% saline water washed from uninoculated plates. Bacterisation levels of seeds were determined by agitating 4 seeds from each treatment and plated after serial dilution on NA plate. Mean cfu/seed were determined by averaging the cfu/gm values of three populations in three replicates per treatment after 48 h incubation of the plates at 28°C. Seed for treatments in which mixtures of three isolates were used, were inoculated by using the same total number of bacteria for the inoculum as was used for the single-isolate treatments. Thus, one-third the normal amount of each isolate in the mixture was used.

Trays (35x35 cm.) with 16 (4x4) places per tray (each space was of 7 cm. width, 10 cm. depth and 1 cm. apart from each other) were used, to grow maize. Each place was filled up to 8 cm. with non-sterilised soil. Tap water (25 ml.) was added to each hole before planting seeds to adjust the soil to 20% moisture. Four bacterial-treated seed was added per hole. The experiment in greenhouse was carried out in four different sets of 16 maize seedlings each, for non-bacterised (control) and bacterised (treated) seeds. In each set, data of 21-days-old seedlings was noted with respect to dry weight of plants. In order for the bacterial strain to be plant growth promoter, the seedlings treated with the bacteria must have averaged at least 10% higher dry weight than comparable non-bacterised plants.

Of the 150 bacterial strains tested in the greenhouse test, 50 were determined to be plant growth promoting according to above criteria.

### EXAMPLE 4

### Screening of bacterial strains for abiotic stress tolerance

The bacterial strains that were suppressive to pathogenic fungi *in vitro* and enhanced plant growth of maize when screened in greenhouse by growing bacteria treated maize seeds in non-sterile soil, compared with the control maize plants grown without bacterial treatment were further screened for abiotic stress tolerance as follows: The stress tolerance of the strains towards salt (NaCl), pH, and temperature was tested by growing them on nutrient broth (NB; Beef extract 5.0 gm, peptone 10.0 gm, sodium chloride 5.0 gm, distilled water 1000 ml, pH 7.2) under various stress, conditions, e.g., like 6% salt (NaCl), 5-9 pH, and 55°C temperature. Viable cells were counted by removing samples at various times in the presence or absence of stress, as indicated. First of all, the 50 strains were subjected to 6% salt stress. Fifteen strains out of 50 were able to grow in the presence of 6% salt stress overnight (14-16 hrs) at 30°C on a New Brunswick Scientific, USA, Innova Model 4230 refrigerated incubator shaker at 180 rpm. The 15 strains tolerant to 6% salt stress were also able to grow at pH 9.0 stress overnight. However, only 3 strains out of 15 were able to grow at 55°C stress overnight. Serial dilutions of each sample were spotted (25 µl) onto NA plates, and incubated at 30°C in triplicate as described earlier [C.S. Nautiyal et al., FEMS Microbiology Letters, Volume 182, pp. 291-296 (2000)]. Viable cells were counted after 2-3 days.

Of the 50 bacterial strains tested in the stress tolerance test, the 3 strains NRRL number *B. lentimorbus* NRRL B-30486, *B. subtilis* NRRL B-30487, and *B. lentimorbus* NRRL B-30488 were thus determined to be stress tolerant according to above criteria.

### EXAMPLE 5

### Ability of B. lentimorbus NRRL B-30486, B. subtilis NRRL B-30487, and B. lentimorbus NRRL B-30488 to solubilise phosphate under abiotic stress conditions

The 3 bacterial strains *B. lentimorbus* NRRL B-30486, *B. subtilis* NRRL B-30487, and *B. lentimorbus* NRRL B-30488 that were suppressive to pathogenic fungi *in vitro,* enhanced plant growth of maize when screened in greenhouse by growing bacteria treated maize seeds in non-sterile soil, compared with the control maize plants grown without bacterial treatment, and were tolerant to abiotic stresses (salt, pH, and temperature) were further screened for their ability to solubilise phosphate under abiotic stress conditions as follows: Quantitative estimation of phosphate solubilisation in broth was carried out using Erlenmeyer flasks (150 ml) containing 10 ml of medium inoculated in triplicate with the bacterial strain (100 µl inoculum with approximately Log 9 cfu/ml).

Value refers to the amount of P solubilised (µg/ml) by strains when individually grown for 3 days in National Botanical Research Institute's phosphate growth medium (NBRIP; glucose, 10 g; Ca₃(PO4)2 tricalcium phosphate, 5 g; MgCl₂.6H₂O, 5 g; MgSO₄.7H₂O, 0.25 g; KCl, 0.2 g and (NH₄)₂SO₄, 0.1 g [C.S. Nautiyal, FEMS Microbiology Letters, Volume 170, pp. 265-270 (1999)], at 30°C in the presence of 0% salt (NaCl) at pH 7. The effect of salt (NaCl), pH, and temperature on solubilisation of phosphate was tested by growing them on NBRIP in the presence of NaCl (0, 1, 2, and 4%), pH (7 and 9), and temperature (30 and 45°C), as indicated (Table 4). Autoclaved, uninoculated batch cultures served as negative controls. Flasks were incubated for 3 days at 30°C on a New Brunswick Scientific, USA, Innova Model 4230 refrigerated incubator shaker at 180 rpm. The strains were harvested by centrifugation at 10000 rpm for 10 min, using a Sorvall RC 5C centrifuge, Dupont, USA. The concentration of phosphate in culture supernatant was estimated using the Fiske and Subbarow method [C.H. Fiske and Y. Subbarow, Journal of Biological Chemistry, Volume 66, pp. 375-400 (1925)].

**TABLE 4**

| % Salt (NaCl) Strain | | Phosphate solubilisation (µg/ml) | | | |
|---|---|---|---|---|---|
| | | pH 7 | | pH 9 | |
| | | 30°C | 45°C | 30°C | 45°C |
| | NRRL B-30486 | | | | |
| 0 | | 3.0 | 6.6 | 3.8 | 6.1 |
| 1 | | 4.7 | 6.5 | 4.6 | 11.6 |
| 2 | | 4.5 | 9.9 | 4.8 | 11.2 |
| 4 | | 4.8 | 10.5 | 4.1 | 10.3 |
| | NRRL B-30487 | | | | |
| 0 | | 2.4 | 1.3 | 0.83 | 1.5 |
| 1 | | 3.4 | 6.0 | 2.8 | 3.2 |
| 2 | | 6.2 | 6.0 | 5.5 | 5.7 |
| 4 | | 2.5 | 12.5 | 5.6 | 13.2 |
| | NRRL B-30488 | | | | |
| 0 | | 33.8 | 42.9 | 42.9 | 43.0 |
| 1 | | 17.0 | 42.9 | 13.5 | 43.0 |
| 2 | | 12.0 | 0.0 | 19.4 | 43.0 |
| 4 | | 13.0 | 0.0 | 8.8 | 43.0 |

All the 3 bacterial strains *B. lentimorbus* NRRL B-30486, *B. subtilis* NRRL B-30487, and *B. lentimorbus* NRRL B-30488 demonstrated variable phosphate solubilisation induction ability, under *in vitro* conditions in the presence of high salt, high pH, and high temperature stress.

### EXAMPLE 6

### Ability of B. lentimorbus NRRL B-30486, B. subtilis NRRL B-30487, and B. lentimorbus NRRL B-30488 under in vitro conditions to suppress pathogenic fungi in the presence or absence of high salt and pH stress

The 3 bacterial strains *B. lentimorbus* NRRL B-30486, *B. subtilis* NRRL B-30487, and *B*. *lentimorbus* NRRL B-30488 were screened for their biocontrol activity against several plant pathogenic fungi, under *in vitro* conditions in the presence or absence of high salt and pH stress (Table 5).

**TABLE 5**

| Pathogenic strain | Inhibition zone (mm) | | |
|---|---|---|---|
| | B-30486 | B-30487 | B-30488 |
| *Fusarium oxysporum* f. sp. *ciceri* | | | |
| pH 3; 0% salt (NaCl) | 10 | 20 | 10 |
| pH 3; 2% salt | 20 | 25 | 20 |
| pH 3; 4% salt | 10 | NG* | 20 |
| pH 7; 0% salt | 8 | 6 | 7 |
| pH 7; 2% salt | 17 | 20 | 15 |
| pH 7; 4% salt | 12 | NG | 16 |
| pH 9; 0% salt | 5 | 5 | 5 |
| pH 9; 2% salt | 20 | 10 | 15 |
| pH 9; 4% salt | 13 | NG | 14 |
| pH 11; 0% salt | 15 | 10 | 20 |
| pH 11; 2% salt | 20 | 20 | 20 |
| pH 11; 4% salt | 15 | 10 | 20 |
| *Sclerotium rolfsii* | | | |
| pH 3; 0% salt (NaCl) | 5 | NZ** | 5 |
| pH 3; 2% salt | 10 | 5 | NZ |
| pH 3; 4% salt | 20 | 5 | NG |
| pH 7; 0% salt | 3 | 10 | NZ |
| pH 7; 2% salt | 4 | 3 | 2 |
| pH 7; 4% salt | NG | NG | NG |
| pH 9; 0% salt | 8 | NZ | 7 |
| pH 9; 2% salt | 13 | 7 | 13 |
| pH 9; 4% salt | 25 | 10 | 20 |
| pH 11; 0% salt | 5 | NZ | NZ |
| pH 11; 2% salt | 20 | 20 | 20 |
| pH 11; 4% salt | 20 | 5 | 25 |

| | Inhibition zone at pH 7; 0% salt | | |
|---|---|---|---|
| *Rhizoctonia solani* | 6 | NZ | 3 |
| *Alternaria solani* | 10 | 6 | 8 |
| *Pythium aphanidermatum* | 10 | 4 | 10 |
| *Phytophthora palmivora* | 6 | 12 | 7 |
| *Sclerotinia sclerotiorum* | 14 | 10 | 11 |
| *ColletotrichumfalcatulI1* | 11 | 10 | NZ |
| *Penicillium* sp. | 2 | 5 | NZ |
| *Curvularia lunata* | 2 | 3 | 10 |
| *Aspergillus niger* | 2 | 10 | 3 |
| *Phoma sorghii* | NZ | 5 | NZ |
| *Fusarium moniliforme* | 11 | 6 | 10 |

| | | | |
|---|---|---|---|
| NG* = No growth of fungi, NZ** = No inibition zone | | | |

All the 3 bacterial strains *B. lentimorbus* NRRL B-30486, *B. subtilis* NRRL B-30487, and *B. lentimorbus* NRRL B-30488 demonstrated variable biocontrol activity against several phytopathogenic fungi, under *in vitro* conditions in the presence of high salt and/or pH stress. The strains also demonstrated variable biocontrol activity activity against several phytopathogenic fungi, under *in vitro* conditions in the presence or absence of high salt and pH stress. Therefore, the possibility of using consortium of all the three bacteria was explored.

### EXAMPLE 7

### Interaction of B. lentimorbus NRRL B-30486, B. subtilis NRRL B-30487, and B. lentimorbus NRRL B-30488 individually and their consortium, under in vitro conditions with chickpea phytopathogenic fungi

Interaction of *F. oxysporum* f. sp. *ciceri*, *Rhizoctonia solani, Pythium* sp., and *S*. *sclerotiorum* with *B. lentimorbus* NRRL B-30486, *B. subtilis* NRRL B-30487, and *B*. *lentimorbus* NRRL B-30488 individually and in a consortium in liquid medium was elucidated in a dual culture test by growing the bacterium/consortium on nutrient broth in the presence and absence of the fungi. An agar disk (5-mm in diameter) of the *F*. *oxysporum* f. sp. *ciceri*, *Rhizoctonia solani*, *Pythium* sp., and *S*. *sclerotiorum* was individually inoculated in 150-ml Erlenmeyer flasks containing 50 ml nutrient broth.

A suspension of *B. lentimorbus* NRRL B-30486, *B. subtilis* NRRL B-30487, and *B*. *lentimorbus* NRRL B-30488 individually and its consortium, containing Log 8.0 cfu/ml was inoculated and the flasks were incubated at 30°C for 7 days in an incubator shaker under static condition, and the control cultures were grown without bacteria. Consortium of the 3 bacterial strains *B. lentimorbus* NRRL B-30486, *B. subtilis* NRRL B-30487, and *B. lentimorbus* NRRL B-30488 was prepared by mixing the 3 cultures of approximately Log 8.0 cfu/ml, in the ratio of 1:1:1. Mycelial dry weight of the fungus grown in the presence and absence of *B. lentimorbus* NRRL B-30486, *B. subtilis* NRRL B-30487, and *B. lentimorbus* NRRL B-30488 individually and its consortium was determined by filtering out the spent media using a Whatman filter paper no. 1, and drying the fungal mass on the filter paper at 60°C for 3 days. Test results of the interaction of *B. lentimorbus* NRRL B-30486, *B. subtilis* NRRL B-30487, and *B. lentimorbus* NRRL B-30488 individually and in a consortium, under *in vitro* conditions with *F*. *oxysporum* f. sp. *ciceri, Rhizoctonia solani, Pythium* sp., and *S*. *sclerotiorum* are presented in Table 6.

**TABLE 6**

| Treatment | Fungi | |
|---|---|---|
| | Dry weight (mg) | % inhibition over control |
| *Fusarium oxysporum* f. sp. *ciceri* (FO) | | |
| 1. FO | 150 | 0 |
| 2. FO + B-30486 | 78 | 48 |
| 3. FO + B-30487 | 96 | 36 |
| 4. FO + B-30488 | 84 | 44 |
| 5. FO + B-30486 + B-30487 + B-30488 | 56 | 63 |

| *Rhizoctoizia solani* (RS) | | |
|---|---|---|
| 1. RS | 80 | 0 |
| 2. RS + B-30486 | 30 | 63 |
| 3. RS + B-30487 | 34 | 58 |
| 4. RS + B-30488 | 48 | 40 |
| 5. RS + B-30486 + B-30487+B-30488 | 26 | 68 |

| *Pythium* sp. (PS) PS | | |
|---|---|---|
| 1. | 50 | 0 |
| 2. PS + B-30486 | 40 | 20 |
| 3. PS + B-30487 | 48 | 4 |
| 4. PS + B-30488 | 23 | 54 |
| 5. PS + B-30486 + B-30487+ B-30488 | 21 | 58 |

| *Sclerotinia sclerotiorum* (SS) 1. SS | | |
|---|---|---|
| | 313 | 0 |
| 2. SS + B-30486 | 72 | 77 |
| 3. SS + B-30487 | 96 | 69 |
| 4. SS+B-30488 | 84 | 73 |
| 5. SS+B-30486 + B-30487+B-30488 | 64 | 80 |

As can be seen from the results which are presented in Table 6, all the three bacterial strains *B. lentimorbus* NRRL B-30486, *B. subtilis* NRRL B-30487, and *B. lentimorbus* NRRL B-30488 individually and their consortium effectively inhibited the growth of *F*. *oxysporum* f. sp. *ciceri*, *Rhizoctonia solani, Pythium* sp., and *S*. *sclerotiorum* under *in vitro* conditions. However, consortium of the bacterial strains was most effective in inhibiting the growth of the test fungi.

### EXAMPLE 8

### Survival of B. lentimorbus NRRL B-30486, B. subtilis NRRL B-30487, and B. lentimorbus NRRL B-30488 individually and in a consortium, on vermiculite as carrier

Determination of the survival of 3 bacterial strains *B. lentimorbus* NRRL B-30486, *B*. *subtilis* NRRL B-30487, and *B. lentimorbus* NRRL B-30488 individually and in a consortium, on vermiculite as carrier, over the period of twelve months, at 10°C was accomplished according to following method. The 3 bacterial strains *B. lentimorbus* NRRL B-30486, *B. subtilis* NRRL B-30487, and *B. lentimorbus* NRRL B-30488 were grown individually in liquid growth medium NB. Cultures were grown in 2-liters flasks containing 1.5 litres of NB medium and incubated for 2 days at 30°C on a New Brunswick Scientific, USA, Innova Model 4230 refrigerated incubator shaker at 180 rpm. After 2 days of growth 300 ml of the culture was added to 1 kg of sterile vermiculite containing autoclavable plastic bag, which yielded approximately 30% moisture of the product. Consortium of the 3 bacterial strains *B. lentimorbus* NRRL B-30486, *B. subtilis* NRRL B-30487, and *B. lentimorbus* NRRL B-30488 was prepared by mixing the 3 cultures of approximately Log 8.5 cfu/ml, in the ratio of 1:1:1. Incubating the sealed bags for 2 days at 30°C did curing of the bioinoculant preparation. After curing, the sealed bags were stored at 10°C and aliquots were periodically removed for viability measurements (Table 7). Viability of the product was determined by standard serial dilution method on NA plates.

**TABLE 7**

| Months | Log cfu/g of vermiculite | | | |
|---|---|---|---|---|
| | | | | |
| | B-30486 | B-30487 | B-30488 | B-30486+ B-30487+ B-30487 (Consortium) |
| 0 | 8.4 | 8.8 | 8.4 | 8.5 |
| 1 | 10.2 | 9.7 | 10.3 | 9.8 |
| 2 | 9.8 | 9.7 | 9.9 | 9.2 |
| 4 | 9.4 | 9.3 | 9.6 | 9.2 |
| 6 | 8.8 | 8.3 | 8.9 | 8.8 |
| 9 | 8.4 | 8.3 | 8.5 | 8.8 |
| 12 | 7.9 | 7.7 | 8.3 | 8.1 |

As shown in the Table 7, all the three strains *B. lentimorbus* NRRL B-30486, *B. subtilis* NRRL B-30487, and *B. lentimorbus* NRRL B-30488 individually and in a consortium demonstrated good survival rates, during long-term storage in vermiculite at 10°C. After twelve months of storage, approximately Log 8 cfu/g of vermiculite was present. These data indicate that vermiculite works as an excellent carrier material for the strains to be later inoculated onto seeds, plants or soil, as no appreciable loss of cell viability was observed.

### EXAMPLE 9

### Biocontrol activity of B. lentimorbus NRRL B-30486, B. subtilis NRRL B-30487, and B. lentimorbus NRRL B-30488 individually and in a consortium, in greenhouse against chickpea phytopathogenic fungi

The 3 bacterial strains *B. lentimorbus* NRRL B-30486, *B. subtilis* NRRL B-30487, and *B. lentimorbus* NRRL B-30488 were screened individually and in a consortium, in greenhouse against chickpea phytopathogenic fungi. Cultivation of fungi for plant assay was accomplished using a 1000 ml-Eelenmeyer flask with 100 g corn and 400 g coarse sand was autoclaved and after autoclaving moisture was adjusted to 15% with sterile distilled water. The flask was incubated at 30°C individually with one 10 mm diameter agar plug from a nutrient agar culture of *F. oxysporum* f. sp. *ciceri, R. solani* and *Pythium* sp. in dark for 4 weeks. After four weeks the mixture air-dried and grounded and sieved to obtain particles 0.5 mm in size. Each of the inoculum was intimately mixed with sterile soil at 0.15% inoculum per total weight of soil, to give a final mixture of 0.45% inoculum of *F. oxysporum* f. sp. *ciceri, R. solani* and *Pythium* sp. per total weight of soil as described earlier [C.S. Nautiyal, Current Microbiology, Volume 35, pp. 52-58 (1997)].
The experiment to examine the biocontrol activity of *B. lentimorbus* NRRL B-30486, *B*. *subtilis* NRRL B-30487, and *B. lentimorbus* NRRL B-30488 individually and in a consortium was carried out in four different sets of 30 chickpea seedlings each, for treated and non-treated seeds (control). Chickpea seeds were prepared for inoculum of *B*. *lentimorbus* NRRL B-30486, *B. subtilis* NRRL B-30487, and *B. lentimorbus* NRRL B-30488 individually and in a consortium as described in Example 3, except vermiculite was used as carrier as described in Example 8, instead of direct inoculum from petri plate. In each set, data was noted during five months of plant growth with respect to seedling germination, seedling mortality (dead seedlings, stunting of shoot height, drooping of leaves, root decolourisation), plant height, number of pods and seed dry weight. The results are tabulated in the following Table 8.

**TABLE 8**

| Observations | Treatment | | |
|---|---|---|---|
| Inoculum | Un-inoculated Inoculated control | %increase over | control |
| B-30486 | | | |
| Seedling germination (%) | 82 | 93 | 13.41 |
| Seedling mortality (%) | 87 | 31 | -64.36 |
| Plant height (cm) | 29 | 37 | 27.58 |
| Number of pods/plant | 39 | 48 | 23.07 |
| Seed dry weight/ | 17 | 20 | 18.78 |
| 100 seeds (g) | | | |
| B-30487 | | | |
| Seedling germination (%) | 71 | 82 | 15.49 |
| Seedling mortality (%) | 87 | 38 | -56.32 |
| Plant height (cm) | 29 | 34 | 17.24 |
| Number of pods/plant | 39 | 43 | 10.25 |
| Seed dry weight/ | 17 | 19 | 12.73 |
| 100 seeds (g) | | | |
| B-30488 | | | |
| Seedling germination (%) | 82 | 100 | 21.95 |
| Seedling mortality (%) | 87 | 28 | -67.8 |
| Plant height (cm) | 29 | 41 | 41.37 |
| Number of pods/plant | 39 | 52 | 33.33 |
| Seed dry weight/ | 17 | 20 | 21.95 |
| 100 seeds (g) | | | |
| B-30486 + B-30487+ B-30488 (Consortium) | | | |
| Seedling germination (%) | 82 | 100 | 21.95 |
| Seedling mortality (%) | 87 | 10 | -85.5 |
| Plant height (cm) | 29 | 43 | 48.27 |
| Number of pods/plant | 39 | 61 | 56.41 |
| Seed dry weight/ | 17 | 23 | 39.5 |
| 100 seeds (g) | | | |

As can be seen from the results which are presented in Table 8, inoculated plants demonstrated less seedling mortality, and better seedling germination, plant height, number of pods and seed dry weight, compared with un-inoculated control. Among the inoculated plants, consortium showed best results in terms of less seedling mortality, and better seedling germination, plant height, number of pods and seed dry weight.

### EXAMPLE 10

### Plant growth promotion activity of B. lentimorbus NRRL B-30486, B. subtilis NRRL B-30487, and B. lentimorbus NRRL B-30488, individually and in a consortium, in greenhouse using chickpea

The experiment to examine the plant growth promotion activity of *B. lentimorbus* NRRL B-30486, *B. subtilis* NRRL B-30487, and *B. lentimorbus* NRRL B-30488 individually and in a consortium was carried out in four different sets of 30 chickpea seedlings each, for treated and non-treated seeds (control). Chickpea seeds were prepared for inoculum of *B*. *lentimorbus* NRRL B-30486, *B. subtilis* NRRL B-30487, and *B. lentimorbus* NRRL B-30488 individually and in a consortium using vermiculite as carrier as described in Example 9. In each set, data was noted during five months of plant growth with respect to seedling germination, plant height, number of pods and seed dry weight. The results are tabulated in the following Table 9.

**TABLE 9**

| Observations | Treatment | | |
|---|---|---|---|
| | Un-inoculated control | Inoculated | %increase over control |
| B-30486 | | | |
| Seedling germination(%) | 82 | 100 | 21.95 |
| Plant height (cm) | 29 | 38 | 31.03 |
| Number of pods/plant | 39 | 53 | 35.89 |
| Seed dry weight/ | 17 | 21 | 27.88 |
| 100 seeds (g) | | | |
| B-30487 | | | |
| Seedling germination (%) | 82 | 92 | 12.19 |
| Plant height (cm) | 29 | 39 | 34.48 |
| Number of pods/plant | 39 | 46 | 17.95 |
| Seed dry weight/ | 17 | 20 | 18.78 |
| 100 seeds (g) | | | |
| B-30488 | | | |
| Seedling germination (%) | 82 | 100 | 21.95 |
| Plant height (cm) | 29 | 44 | 51.72 |
| Number of pods/plant | 39 | 59 | 51.28 |
| Seed dry weight/ | 17 | 23 | 40.0 |
| 100 seeds (g) | | | |
| B-30486 + B-30487+ B-30488 (Consortium) | | | |
| Seedling germination (%) | 82 | 100 | 21.95 |
| Plant height (cm) | 29 | 46 | 58.62 |
| Number of pods/plant | 39 | 64 | 64.10 |
| Seed dry weight/ | 17 | 25 | 48.48 |
| 100 seeds (g) | | | |

As can be seen from the results which are presented in Table 9, inoculated plants demonstrated better seedling germination, plant height, number of pods and seed dry weight, compared with un-inoculated control. Among the inoculated plants, consortium showed best results in terms of better seedling germination, plant height, number of pods and seed dry weight.

### EXAMPLE 11

### Plant growth promotion activity of the consortium of B. lentimorbus NRRL B-30486, B. subtilis NRRL B-30487, and B. lentimorbus NRRL B-30488 in greenhouse on various plants

Seeds were prepared and inoculated to test the plant growth promotion activity of the consortium of *B. lentimorbus* NRRL B-30486, *B. subtilis* NRRL B-30487, and *B*. *lentimorbus* NRRL B-30488 in greenhouse on various plants, as described above in example 8. The experiment in greenhouse was carried out in four different sets of 16 seedlings each, for non-bacterised (control) and bacterised (treated) seeds of *Zea mays, Abelmoschus esculentus, Luffa cylindrica, Lycopersicon esculentum,* and *Cucumis sativus.* In each set, data of 21-days-old seedlings was noted with respect to dry weight of plants. The results of the plant growth promotion activity of the consortium of *B. lentimorbus* NRRL B-30486, *B. subtilis* NRRL B-30487, and *B. lentimorbus* NRRL B-30488 in greenhouse on various plants are given in Table 10.

**TABLE 10**

| Test plants | Dry weight (mg)/plant | | |
|---|---|---|---|
| | Un-inoculated control | Inoculated | %increase over control |
| 1*. Zea mays* | 67.5 | 80 | 18.51 |
| 2. *Abelmoschus esculentus* | 20 | 35 | 75.0 |
| 3. *Luffa cylindrica* | 76 | 110 | 44.73 |
| 4. *Lycopersicon esculentum* | 2 | 5 | 150.0 |
| 5. *Cucumis sativus* | 25 | 110 | 340.0 |

As the data in Table 10 demonstrate, variable plant growth promotery response on the dry weight *of Zea mays, Abelmoschus esculentus, Luffa cylindrica, Lycopersicon esculentum,* and *Cucumis sativus* by the consortium of *B. lentimorbus* NRRL B-30486, *B. subtilis* NRRL B-30487, and *B. lentimorbus* NRRL B-30488 in greenhouse. As can be seen from the results, the dry weight of the bacterised seedlings was higher in the range of 18-340% compared with non-bacterised seedlings.

### EXAMPLE 12

### Field trial of biocontrol activity of the consortium of B. lentimorbus NRRL B-30486, B. subtilis NRRL B-30487, and B. lentimorbus NRRL B-30488 against chickpea phytopathogenic fungi

Biocontrol activity of the consortium *of B. lentimorbus* NRRL B-30486, *B. subtilis* NRRL B-30487, and *B. lentimorbus* NRRL B-30488 against chickpea phytopathogenic fungi was field tested on the farms of Banaras Hindu University, Varanasi; Chandra Shekhar Azad University of Agriculture & Technology, Kanpur, and Indian Agricultural Research Institute, New Delhi on plots with consistent history of heavy infection of chickpea variety Radhey, by *F. oxysporum* f. sp. *ciceri.* The bacterial strains were propagated as described in Example 8. All the trials were seeded in October 2000 and harvested after five months of growth in March 2001. Field soil moisture at the time of seeding was in the range of 25-30% and the crop was entirely rain fed. Mechanical cultivation practices were not used after seeding. Each experiment was in a randomised block design. Six replicates per treatment within blocks consisted of plots of three 4-m rows (30 cm spacing). After 10 days of germination, seedlings were thinned out to 50 seedlings per row. All results were collected from the middle rows, excluding two adjacent rows as guard rows, for both non-bacterised (control) and bacterised (treated) seeds of chickpea with consortium of *B. lentimorbus* NRRL B-30486, *B. subtilis* NRRL B-30487, and *B. lentimorbus* NRRL B-30488 (Log 8 Cfu/ml). Values are the mean of six replications of 10 plants each, whereas values for the dry weights (g) are the mean of 100 seeds chosen at random from six replications of 10 plants each.

**TABLE 11**

| Observations | | Treatment | |
|---|---|---|---|
| Location | Un-inoculated control | Inoculated | % increase over control |
| Varanasi | | | |
| Seedling survival (%) | 55 | 73 | 33.69 |
| Plant height (cm) | 41 | 57 | 38.05 |
| Number of pods/plant | 65 | 79 | 20.39 |
| Weight of 100 seeds (g) | 17 | 20 | 19.87 |
| Yield/plot (g) | 410 | 725 | 76.83 |
| Kanpur | | | |
| Seedling survival (%) | 40 | 83 | 105.19 |
| Plant height (cm) | 47 | 62 | 32.2 |
| Number of pods/plant | 62 | 94 | 51.61 |
| Weight of 100 seeds (g) | 16 | 20 | 24.68 |
| Yield/plot (g) | 345 | 870 | 152.17 |
| New Delhi | | | |
| Seedling survival (%) | 47 | 87 | 85.11 |
| Plant height (cm) | 47 | 57 | 21.27 |
| Number of pods/plant | 44 | 104 | 136.36 |
| Weight of 100 seeds (g) | 15 | 19 | 26.49 |
| Yield/plot (g) | 450 | 900 | 100.0 |

As can be seen from the data in Table 11, at all the three locations compared to control, chickpea seeds treated with consortium of *B. lentimorbus* NRRL B-30486, *B. subtilis* NRRL B-30487, and *B. lentimorbus* NRRL B-30488 improved plant performance, in terms of enhanced % seedling survival, plant height, number of pods/plant, weight of 100 seeds, and yield/plot.

### EXAMPLE 13

### Survival of B. lentimorbus NRRL B-30486, B. subtilis NRRL B-30487, and B. lentimorbus NRRL B-30488 individually and in a consortium, on charcoal as carrier

Determination of the survival of 3 bacterial strains *B. lentimorbus* NRRL B-30486, *B*. *subtilis* NRRL B-30487, and *B. lentimorbus* NRRL B-30488 individually and in a consortium, on charcoal as carrier, over the period of six months, at 10°C was accomplished according to following method. The 3 bacterial strains *B. lentimorbus* NRRL B-30486, *B. subtilis* NRRL B-30487, and *B. lentimorbus* NRRL B-30488 were grown individually in liquid growth medium NB. Cultures were grown in 2-liters flasks containing 1.5 liters of NB medium and incubated for 2 days at 30°C on a New Brunswick Scientific, USA, Innova Model 4230 refrigerated incubator shaker at 180 rpm. After 2 days of growth 600 ml of the culture was added to 1 kg of sterile charcoal containing autoclavable plastic bag, which yielded approximately 30% moisture of the product. Consortium of the 3 bacterial strains *B. lentimorbus* NRRL B-30486, *B. subtilis* NRRL B-30487, and *B. lentimorbus* NRRL B-30488 was prepared by mixing the 3 cultures of approximately Log 8.5 cfu/ml, in the ratio of 1:1:1. Incubating the sealed bags for 2 days at 30°C did curing of the bioinoculant preparation. After curing, the sealed bags were stored at 10°C and aliquots were periodically removed for viability measurements. Viability of the product was determined by standard serial dilution method on NA plates.

Table 12 shows the survival of 3 bacterial strains *B. lentimorbus* NRRL B-30486, *B*. *subtilis* NRRL B-30487, and *B. lentimorbus* NRRL B-30488 individually and in a consortium, on charcoal as carrier, over the period of six months, at 10°C, following harvesting.

**TABLE 12**

| Months | Log cfu/g on charcoal | | | |
|---|---|---|---|---|
| | B-30486 | B-30487 | B-30488 | B-30486+ B-30487+ B-30487 (Consortium) |
| 0 | 8.4 | 8.8 | 8.4 | 8.5 |
| 1 | 9.2 | 9.5 | 9.6 | 9.2 |
| 2 | 9.1 | 9.1 | 9.5 | 9.6 |
| 4 | 8.7 | 8.4 | 8.9 | 8.7 |
| 6 | 7.1 | 7.6 | 7.5 | 7.8 |

As shown in the Table 12, all the three strains *B. lentimorbus* NRRL B-30486, *B. subtilis* NRRL B-30487, and *B. lentimorbus* NRRL B-30488 individually and in a consortium demonstrated good survival rates, during long-term storage in charcoal at 10°C. After six months of storage, approximately Log 7 cfu/g was present. These data indicate that charcoal works as an excellent carrier material, albeit not as effective when compared with vermiculite, for the strains to be later inoculated onto seeds, plants or soil. However, as a carrier material the cost of charcoal is 8 fold less, compared with vermiculite. Therefore, the lower cost of the charcoal makes its choice as a carrier very attractive for its large-scale commercial use.

### EXAMPLE 14

### Use of sugar factory sulphitation press mud and distillery spent wash as carrier for preparing at commercial scale consortium of B. lentimorbus NRRL B-30486, B. subtilis NRRL B-30487, and B. lentimorbus NRRL B-30488

The following procedures were performed to utilize sugar factory sulphitation press mud and distillery spent wash as carrier for preparing at commercial scale, after its fermentation-using consortium of *B. lentimorbus* NRRL B-30486, *B. subtilis* NRRL B-30487, and *B. lentimorbus* NRRL B-30488.

Cultures *of B. lentimorbus* NRRL B-30486, *B. subtilis* NRRL B-30487, and *B. lentimorbus* NRRL B-30488 were grown individually in molasses diluted with water in the ratio of 1:5. Cultures were grown in 2-liters flasks containing 1.5 litres of molasses diluted with water in the ratio of 1:5 and incubated for 3 days at 30°C on a New Brunswick Scientific, USA, Innova Model 4230 refrigerated incubator shaker at 180 rpm. After 3 days of growth consortium of the 3 bacterial strains *B. lentimorbus* NRRL B-30486, *B. subtilis* NRRL B-30487, and *B. lentimorbus* NRRL B-30488 was prepared by mixing the 3 cultures of approximately Log 9 cfu/ml, in the ratio of 1:1:1. Consortium of the 3 bacterial strains thus obtained was further diluted with water in the ratio of 1:10, containing approximately Log 8-9 cfu/ml. Growing the bacteria in molasses makes the process economically very viable.

About 300 tons of fresh sulphinated press mud, obtained while clarifying sugarcane juice with lime and sulphur dioxide, is laid out on cemented floor with width of 2.5 meter, 1.5 meter tall, and length of 150 meter windrows. The press mud was churned and homogenised, either manually or by the help of an aero tiller before adding about 600 liter consortium of *B. lentimorbus* NRRL B-30486, *B. subtilis* NRRL B-30487, and *B. lentimorbus* NRRL B-30488, prepared as described above, i.e., 2 liter of the consortium/ton of press mud and mixing again. Within 2-3 days, temperature of the windrows goes up to 70-75°C. Thereafter, the windrows are churned twice a day and spent wash is sprayed on daily basis to maintain 55-65% moisture, for up to 40 days. After about 40 sprays the spraying of spent wash is stopped and windrows regularly turned for 3-5 days to reduce the moisture of the fermented product to about 30%. Usually after 45 days, the temperature of the windrows goes down to 40-45°C. The product at this stage is totally fermented and ready for its application and packaging.

To monitor the presence of *Bacillus* strains during fermentation process of the windrows, spontaneous rifampicin-resistant (Rif) strain derivative of *B. lentimorbus* NRRL *B-*30488R was isolated on NA plates, containing 100 µg rifampicin. Spontaneous *B*. *lentimorbus* NRRL B-30488R strain showing growth comparable to the wild type *B. lentimorbus* NRRL B-30488 based on the size of colony, on agar plates containing 100 µg rifampicin, was selected for further studies. Agar plates containing 100 µg rifampicin/ml, an amount sufficient to inhibit the growth of other bacteria in non-sterilised press mud and spent wash were used to recover *B. lentimorbus* NRRL B-30488R from the windrows during fermentation process. Presence of *B. lentimorbus* NRRL B-30488R Log 8 cfu/gm in the fermented product by 45 days is indicative of the survival, multiplication and continued presence of the *B. lentimorbus* NRRL B-30488R, during fermentation process.

### EXAMPLE 15

### Use of sugar factory carbonation press mud as carrier for preparing at commercial scale consortium of B. lentimorbus NRRL B-30486, B. subtilis NRRL B-30487, and B. lentimorbus NRRL B-30488

The procedures for fermenting sugar factory carbonation press mud as carrier for preparing at commercial scale, using consortium of *B. lentimorbus* NRRL B-30486, *B. subtilis* NRRL B-30487, and *B. lentimorbus* NRRL B-30488, were same as described as above in example 14, except water was used instead of spent wash, to maintain the moisture during fermentation.

### EXAMPLE 16

### Comparative analysis of plant growth promotion activity of the consortium of B. lentimorbus NRRL B-30486, B. subtilis NRRL B-30487, and B. lentimorbus NRRL B-30488 in greenhouse using vermiculite, charcoal, fermented sugar factory sulphitation press mud and distillery spent wash, and sugar factory carbonation press mud as carrier, on plants

Seeds were prepared and inoculated with the consortium of *B. lentimorbus* NRRL B-30486, *B. subtilis* NRRL B-30487, and *B. lentimorbus* NRRL B-30488 in greenhouse using vermiculite, charcoal, fermented sugar factory sulphitation press mud and distillery spent wash, and sugar factory carbonation press mud as carriers to test the plant growth promotion activity of the consortium *of B. lentimorbus* NRRL B-30486, *B. subtilis* NRRL B-30487, and *B. lentimorbus* NRRL B-30488 in greenhouse on various plants, as described above in Examples 8, 13, 14, and 15, respectively. The experiment in greenhouse was carried out in four different sets of 16 seedlings each, for non-bacterised (control) and bacterised (treated) seeds of *A. esculentus, C. sativus, Z. mays,Triticum aestivum, Glycine max, Pisum sativum, and Impatiens balsamina.* In each set, data of 21-days-old seedlings was noted with respect to dry weight of plants. The results of the plant growth promotion activity of the consortium of *B. lentimorbus* NRRL B-30486, *B. subtilis* NRRL B-30487, and *B. lentimorbus* NRRL B-30488 in greenhouse on various plants, while using vermiculite, charcoal, fermented sugar factory sulphitation press mud and distillery spent wash, and sugar factory carbonation press mud as carriers, are given in Table 13.

**TABLE 13**

| Plant | Dry weight (mg)/plant | | |
|---|---|---|---|
| Carrier | Un-inoculated Inoculated control | % increase over control | |
| Vermiculite | | | |
| 1. *A. esculentus* | 28 | 47 | 67.85 |
| 2. *C. sativus* | 30 | 95 | 216.67 |
| 3. *Z. mays* | 61 | 74 | 21.31 |
| 4. *Triticum aestivum* | 15 | 23 | 53.33 |
| 5. *Glycine max* | 47 | 73 | 55.32 |
| 6. *Pisum sativum* | 57 | 85 | 49.12 |
| 7. *Impatiens balsamina* | 4 | 12 | 200.0 |
| Charcoal | | | |
| 1. *A. esculentus* | 31 | 50 | 61.23 |
| 2. *C. sativus* | 34 | 94 | 176.4 |
| 3. *Z. mays* | 65 | 83 | 27.63 |
| 4. *Triticum aestivum* | 17 | 26 | 52.94 |
| 5. *Glycine max* | 42 | 72 | 71.42 |
| 6. *Pisum sativum* | 52 | 83 | 59.62 |
| 7. *Impatiens balsamina* | 4 | 9 | 125.0 |
| Fermented sugar factory sulphitation press mud and distillery spent wash | | | |
| 1. *A. esculentus* | 25 | 38 | 52.0 |
| 2. *C. salivus* | 28 | 56 | 100.0 |
| 3. *Z*. *mays* | 57 | 70 | 22.81 |
| 4. *Triticum aestivum* | 13 | 20 | 53.84 |
| 5. *Glycine max* | 40 | 69 | 72.5 |
| 6. *Pisum sativum* | 49 | 76 | 55.1 |
| 7. *Impatiens balsamina* | 5 | 10 | 100.0 |
| Fermented sugar factory carbonation press mud | | | |
| 1. *A. esculentus* | 36 | 54 | 50.0 |
| 2. *C. sativus* | 33 | 63 | 90.90 |
| 3. *Z. mays* | 52 | 66 | 26.92 |
| 4. *Triticum aestivum* | 12 | 20 | 66.62 |
| 5. *Glycine max* | 42 | 71 | 69.05 |
| 6. *Pisum sativum* | 48 | 74 | 54.17 |
| 7. *Impatiens balsamina* | 4 | 10 | 150.0 |

As the data in Table 13 demonstrate, variable plant growth promotery response on the dry weight of different plants by the consortium of *B. lentimorbus* NRRL B-30486, *B. subtilis* NRRL B-30487, and *B. lentimorbus* NRRL B-30488 in greenhouse. As can be seen from the results, the dry weight of the bacterised seedlings of *A. esculentus, C. sativus, Z. mays, Triticum aestivum, Glycine max, Pisum sativum,* and *Impatiens balsamina* was higher in the range of 21-150% compared with non-bacterised seedlings, using vermiculite, charcoal, fermented sugar factory sulphitation press mud and distillery spent wash, and sugar factory carbonation press mud as carriers.

### EXAMPLE 17

### Field trial of biocontrol activity of the consortium of B. lentimorbus NRRL B-30486, B. subtilis NRRL B-30487, and B. lentimorbus NRRL B-30488 against sugarcane phytopathogenic fungi, using vermiculite as carrier

Field trial plot size for all the field trials was of 9.0x3.5 meter plot size, consisting of four rows for each treatment, in triplicate.

Field trials using sugarcane variety Cos 95255 were conducted by placing sugarcane sets at the time of sowing directly on vermiculite, containing the consortium of *B. lentimorbus* NRRL B-30486, *B. subtilis* NRRL B-30487, and *B. lentimorbus* NRRL B-30488, to the saturation of 20%.

Inoculum of both the pathogens *Fusarium moniliforme* and *Colletotrichum falcatum* multiplied in liquid medium was prepared for a dual culture test by growing the fungus individually on NB. An agar disk (5-mm in diameter) of the *F. moniliforme* and *C*. *falcatum* were individually inoculated in 250-ml Erlenmeyer flasks containing 100 ml NB. The flasks were incubated at 30°C for 10 days under static condition. The inoculum was diluted with sterile 0.85% saline Milli Q water (MQW) to spore concentration of Log 5 to 6 spores/ml. Sets were dipped in the inoculum thus prepared of *F. moniliforme* or *C*. *falcatum* as indicated, for 30 minutes before planting. The inoculum was also used to drench the rows before planting sugarcane. Also the experiment was conducted in wilt sick plot where in previous year wilt incidence was as high as 95%.

First sugarcane trial was conducted using pots (9 inches diameter) in August, 2000, at Dhampur Sugar Mills Ltd., Rozagaon, Faizabad using the consortium. After three months of growth plants from pots were shifted into field. Number of infected plants, plant height, number of tillers, and girth of cane were noted in August, 2001. The test results are given in Table 14.

**TABLE 14**

| Observations | Treatment | | |
|---|---|---|---|
| Fungi | Un-inoculated control | Inoculated | % increase over control |
| *Fusarium moniliforme* | | | |
| Mortality (%) | 30 | 0 | n.a.* |
| Plant height (cm) | 161.8 | 181.4 | 12.11 |
| Number of tillers/plant | 3.1 | 6.4 | 106.4 |
| Girth of cane (cm) | 5.8 | 8.1 | 39.66 |
| *Colletotrichum falcatum* | | | |
| Mortality (%) | 80 | 0 | n.a. |
| Plant height (cm) | 152 | 162 | 6.57 |
| Number of tillers/plant | 4.6 | 6.6 | 43.47 |
| Girth of cane (cm) | 5.8 | 7.8 | 34.48 |

| | | | |
|---|---|---|---|
| *n.a.= Not applicable | | | |

The results presented in Table 14 clearly demonstrate effective biocontrol of sugarcane wilt and red rot fungi, increases in the number of tillers, plant height, and girth of cane inoculated with the consortium of *B. lentimorbus* NRRL B-30486, *B. subtilis* NRRL B-30487, and *B. lentimorbus* NRRL B-30488 using vermiculite as carrier, compared with uninoculated control.

### EXAMPLE 18

### Field trial of plant growth promotion activity of the consortium of B. lentimorbus NRRL B-30486, B. subtilis NRRL B-30487, and B. lentimorbus NRRL B-30488 using vermiculite as carrier, on sugarcane at Rozagaon

Field trials using sugarcane were conducted by placing sugarcane sets at the time of sowing directly on vermiculite, containing the consortium of *B. lentimorbus* NRRL B-30486, *B. subtilis* NRRL B-30487, and *B. lentimorbus* NRRL B-30488, prepared as described in Example 8. Sugarcane trial was set up in October 2000 at Dhampur Sugar Mills Ltd., Rozagaon. After nine months of plant growth number of tillers, plant height, girth, millable cane, and cane yield of sugarcane were noted in December 2001. For the field trials sugarcane variety Cos-95255 was used at Dhampur Sugar Mills Ltd., Rozagaon. The test results of the field trials of plant growth promotion activity of the consortium of *B*. *lentimorbus* NRRL B-30486, *B. subtilis* NRRL B-30487, and *B. lentimorbus* NRRL B-30488 using vermiculite as carrier, on sugarcane are given in Table 15.

**TABLE 15**

| Observations | Treatment | | |
|---|---|---|---|
| | Un-inoculated control | Inoculated | % increase over control |
| Number of tillers/plant | 6.2 | 11.0 | 77.42 |
| Plant height (cm) | 200 | 246 | 23.0 |
| Girth of cane (cm) | 9.1 | 11.24 | 23.52 |
| Millable cane | 5 | 8 | 60.0 |
| Cane yield/plot (kg) | 128 | 229 | 78.9 |

The results presented in Table 15 clearly show increases in the number of tillers, plant height, girth, millable cane, and cane yield of cane inoculated with the consortium of *B*. *lentimorbus* NRRL B-30486, *B. subtilis* NRRL B-30487, and *B. lenctimorbus* NRRL B-30488 using vermiculite as carrier, compared with un-inoculated control.

### EXAMPLE 19

### Field trial of plant growth promotion activity of the consortium of B. lentimorbus NRRL B-30486, B. subtilis NRRL B-30487, and B. lentimorbus NRRL B-30488 using vermiculite as carrier, on sugarcane at Dhampur

Field trials using sugarcane were conducted by placing sugarcane sets at the time of sowing directly on vermiculite, containing the consortium of *B. lentimorbus* NRRL B-30486, *B. subtilis* NRRL B-30487, and *B. lentimorbus* NRRL B-30488, prepared as described in Example 8. Sugarcane trials was set up in November, 2000 at Dhampur Sugar Mills Ltd., Dhampur, Bijnour. After thirteen months of plant growth, number of tillers, plant height, and girth of sugarcane were noted in December, 2001. For the field trials sugarcane variety Cos-95255 was used. The test results of the field trials of plant growth promotion activity of the consortium of *B. lentimorbus* NRRL B-30486, *B. subtilis* NRRL B-30487, and *B. lentimorbus* NRRL B-30488 using vermiculite as carrier, on sugarcane are given in Table 16.

**TABLE 16**

| Observations | Treatment | | |
|---|---|---|---|
| | Un-inoculated control | Inoculated | % increase over control |
| Number of tillers/plant | 6.0 | 8.4 | 40.0 |
| Plant height (cm) | 220 | 251 | 14.09 |
| Girth of cane (cm) | 7.2 | 9.4 | 30.56 |
| Millable cane | 4 | 9 | 125.0 |
| Cane yield/plot (kg) | 128 | 217 | 69.53 |

The results presented in Table 16 show increases in the number of tillers, plant height, girth of cane, millable cane, and cane yield inoculated with the consortium of *B*. *lentimorbus* NRRL B-30486, *B. subtilis* NRRL B-30487, and *B. lentimorbus* NRRL B-30488 using vermiculite as carrier, compared with un-inoculated control.

### EXAMPLE 20

### Field trial of plant growth promotion activity of the consortium of B. lentimorbus NRRL B-30486, B. subtilis NRRL B-30487, and B. lentimorbus NRRL B-30488 using charcoal as carrier, on sugarcane

Field trials using sugarcane were conducted by placing sugarcane sets at the time of sowing directly on vermiculite, containing the consortium of *B. lentimorbus* NRRL B-30486, *B. subtilis* NRRL B-30487, and *B. lentimorbus* NRRL B-30488, prepared as described in Example 13. Sugarcane trial was set up in April, 2001 at Dhampur Sugar Mills Ltd., Dhampur. After ten months of plant growth number of tillers, plant height, girth, millable cane, and cane yield of sugarcane were noted in December, 2001. For the field trials sugarcane variety Cos-89003 was used at Dhampur Sugar Mills Ltd., Dhampur. The test results of the field trials of plant growth promotion activity of the consortium of *B*. *lentimorbus* NRRL B-30486, *B. subtilis* NRRL B-30487, and *B. lentimorbus* NRRL B-30488 using charcoal as carrier, on sugarcane are given in Table 17.

**TABLE 17**

| Observations | Treatment | | |
|---|---|---|---|
| | Un-inoculated control | Inoculated | % increase over control |
| Number of tillers/plant | 7.2 | 10.8 | 50.0 |
| Plant height (cm) | 255 | 289 | 13.33 |
| Girth of cane (cm) | 9.2 | 10.8 | 17.33 |
| Millable cane | 5 | 9 | 80.0 |
| Cane yield/plot (kg) | 162 | 208 | 28.39 |

The results presented in Table 17 show increases in the number of tillers, plant height, and girth of cane, millable cane, and cane yield inoculated with the consortium of *B*. *lentimorbus* NRRL B-30486, *B. subtilis* NRRL B-30487, and *B. lentimorbus* NRRL B-30488 using charcoal as carrier, compared with un-inoculated control.

### EXAMPLE 21

### Field trial of plant growth promotion activity of the consortium of B. lentimorbus NRRL B-30486, B. subtilis NRRL B-30487, and B. lentimorbus NRRL B-30488 using fermented sugar factory sulphitation press mud and distillery spent wash as carrier, on sugarcane at Dhampur

Field trials using sugarcane were conducted by placing sugarcane sets at the time of sowing directly on fermented sugar factory sulphitation press mud and distillery spent wash as carrier, containing the consortium of *B. lentimorbus* NRRL B-30486, *B. subtilis* NRRL B-30487, and *B. lentimorbus* NRRL B-30488, prepared as described in Example 14. Sugarcane trial was set up in May, 2001 at Dhampur Sugar Mills Ltd., Dhampur. After ten months of plant growth number of tillers, plant height, girth of sugarcane, millable cane, and cane yield were noted in December, 2001. For the field trials sugarcane variety Cos-89003 was used at Dhampur Sugar Mills Ltd., Dhampur. The test results of the field trials of plant growth promotion activity of the consortium of *B. lentimorbus* NRRL B-30486, *B. subtilis* NRRL B-30487, and *B. lentimorbus* NRRL B-30488 using fermented sugar factory sulphitation press mud and distillery spent wash as carrier, on sugarcane are given in Table 18.

**TABLE 18**

| Observations | Treatment | | |
|---|---|---|---|
| | Un-inoculated control | Inoculated | % increase over control |
| Number of tillers/plant | 6.2 | 14 | 125.8 |
| Plant height (cm) | 248 | 285 | 14.91 |
| Girth of cane (cm) | 6.4 | 11.2 | 75.0 |
| Millable cane | 6 | 11 | 83.33 |
| Cane yield/plot (kg) | 164 | 237 | 44.51 |

The results presented in Table 18 show increases in the number of tillers, plant height, girth of cane, millable cane, and cane yield inoculated with the consortium of *B*. *lentimorbus* NRRL B-30486, *B. subtilis* NRRL B-30487, and *B. lentimorbus* NRRL B-30488 using fermented sugar factory sulphitation press mud and distillery spent wash as carrier, compared with un-inoculated control.

### EXAMPLE 22

### Field trial of plant growth promotion activity of the consortium of B. lentimorbus NRRL B-30486, B. subtilis NRRL B-30487, and B. lentimorbus NRRL B-30488 using fermented sugar factory sulphitation press mud as carrier, on sugarcane at Dhampur

Field trials using sugarcane were conducted by placing sugarcane sets at the time of sowing directly on fermented sugar factory sulphitation press mud and distillery spent wash as carrier, containing the consortium *of B. lentimorbus* NRRL B-30486, *B. subtilis* NRRL B-30487, and *B. lentimorbus* NRRL B-30488, prepared as described in Example 14. Sugarcane trial was set up in May, 2001 at Dhampur Sugar Mills Ltd., Dhampur. After ten months of plant growth number of tillers, plant height, girth of sugarcane, millable cane, and cane yield were noted in December, 2001. For the field trials sugarcane variety Cos-89003 was used at Dhampur Sugar Mills Ltd., Dhampur. The test results of the field trials of plant growth promotion activity of the consortium of *B. lentimorbus* NRRL B-30486, *B. subtilis* NRRL B-30487, and *B. lentimorbus* NRRL B-30488 using fermented sugar factory sulphitation press mud as carrier, on sugarcane are given in Table 19.

**TABLE 19**

| Observations | Treatment | | |
|---|---|---|---|
| | Un-inoculated control | Inoculated | % increase over control |
| Number of tillers/plant | 6.2 | 16 | 158.0 |
| Plant height (cm) | 248 | 313 | 26.2 |
| Girth of cane (cm) | 6.4 | 12.0 | 87.5 |
| Millable cane | 6 | 11.8 | 96.6 |
| Cane yield/plot (kg) | 164 | 256 | 56.0 |

The results presented in Table 19 show increases in the number of tillers, plant height, girth of cane, millable cane, and cane yield inoculated with the consortium of *B*. *lentimorbus* NRRL B-30486, *B. subtilis* NRRL B-30487, and *B. lentimorbus* NRRL B-30488 using fennented sugar factory sulphitation press mud as carrier, compared with uninoculated control.

### EXAMPLE 23

### Field trial of plant growth promotion activity of the consortium of B. lentimorbus NRRL B-30486, B. subtilis NRRL B-30487, and B. lentimorbus NRRL B-30488 using fermented sugar factory carbonation press mud as carrier, on sugarcane at Rozagaon

Field trials using sugarcane were conducted by placing sugarcane sets at the time of sowing directly on fermented sugar factory carbonation press mud as carrier, containing the consortium of *B. lentimorbus* NRRL B-30486, *B. subtilis* NRRL B-30487, and *B*. *lentimorbus* NRRL B-30488, prepared as described in Example 15. Sugarcane trial was set up in May, 2001 at Dhampur Sugar Mills Ltd., Rozagaon. After eight months of plant growth number of tillers, plant height, girth of sugarcane, millable cane, and cane yield were noted in December, 2001. For the field trials sugarcane variety Cos-96258 was used at Dhampur Sugar Mills Ltd., Rozagaon. The test results of the field trials of plant growth promotion activity of the consortium *of B. lentimorbus* NRRL B-30486, *B. subtilis* NRRL B-30487, and *B. lentimorbus* NRRL B-30488 using fermented sugar factory carbonation press mud as carrier, on sugarcane are given in Table 20.

**TABLE 20**

| Observations | Treatment | | |
|---|---|---|---|
| | Un-inoculated control | Inoculated | % increase over control |
| Number of tillers/plant | 6 | 13 | 116.6 |
| Plant height (cm) | 230 | 265 | 15.22 |
| Girth of cane (cm) | 7.2 | 9.5 | 31.94 |
| Millable cane | 5 | 11 | 120.0 |
| Cane yield/plot (kg) | 182 | 280 | 53.85 |

The results presented in Table 20 show increases in the number of tillers, plant height, girth of cane, millable cane, and cane yield inoculated with the consortium of *B*. *lentimorbus* NRRL B-30486, *B. subtilis* NRRL B-30487, and *B. lentimorbus* NRRL B-30488 using fermented sugar factory carbonation press mud as carrier, compared with uninoculated control.

### EXAMPLE 24

### Comparative analysis of effect of pesticides on the growth of B. lentimorbus NRRL B-30486, B. subtilis NRRL B-30487, and B. lentimorbus NRRL B-30488

The 3 bacterial strains *B. lentimorbus* NRRL B-30486, *B. subtilis* NRRL B-30487, and *B*. *lentimorbus* NRRL B-30488 were screened to evaluate the effect of pesticides on its growth as follows: Evaluation of the effect of pesticides on the growth of the bacterial strains in broth was carried out using Erlenmeyer flasks (150 ml) containing 40 ml of medium inoculated in triplicate with the bacterial strain (100 µl inoculum with approximately Log 6 cfu/ml). Value refers to the number of cells (Log cfu/ml) of strains when individually grown for 1 day in NB, at 30°C in the presence of pesticide, as per recommended dose of its application. The effect of pesticide on its growth has been presented in Table 20. Inoculated batch cultures, without any pesticides, served as control. Flasks were incubated for 1 day at 30°C on a New Brunswick Scientific, USA, Innova Model 4230 refrigerated incubator shaker at 180 rpm.

**TABLE 21**

| Pesticide (Active ingredient) | Log cfu/ml | | | |
|---|---|---|---|---|
| | Recommendeddose | B-30486 | B-30487 | B-30488 |
| Control | 0 | 7 | 9 | 7 |
| FUNGICIDES | | | | |
| Mancozeb 75% WP* | 3 g/L | 2 | 2 | NG** |
| Copper oxychloride 50% WP | 6 g/L | 5 | 2 | 3 |
| Chlorothalonil 75% WP | 3 g/L | NG | 2 | NG |
| Tridemorph 80% EC*** | 2 ml/L | 5 | 6 | NG |
| Triadimefon 25% WP | 4g/L | 5 | 6 | 5 |
| Carbendazim 50% WP | 4 g/L | 8 | 10 | 10 |
| Carboxin 75% WP | 4 g/L | 5 | 3 | NG |
| Metalaxyl 8%+Mancozeb 64% WP | 2 g/L | 10 | 10 | 10 |
| Thiophanate-Methyl 70% WP | 3 g/L | 5 | 9 | 8 |
| INSECTICIDES | | | | |
| Monocrotophos 36% SL**** | 1 ml/L | 3 | 10 | 5 |
| Dimethoate 30% EC | 2 ml/L | 4 | 7 | 5 |
| Oxydemeton-methyl 25% EC | 2 ml/L | 7 | 9 | 7 |
| Deltamethrin 2.8% EC | 2 ml/L | 10 | 10 | 10 |
| Endosulfan 35% EC | 2 ml/L | 6 | 7 | 5 |
| Dicofol 18.5% EC | 2.7ml/L | NG | 5 | 3 |
| Chlorpyriphos 20% EC | 2.5 ml/L | 3 | 5 | 3 |

| | | | | |
|---|---|---|---|---|
| *WP=Wettable powder; **NG=No growth; ***EC=Emulsifying concentrate; ****SL=Soluble liquid | | | | |

The results presented in Table 21 demonstrate variable response of pesticides on the growth *of B. lentimorbus* NRRL B-30486, *B. subtilis* NRRL B-30487, and *B. lentimorbus* NRRL B-30488. Among various pesticides tested carbendazim 50% W.P., metalaxyl 8%+mancozeb 64% W.P., and deltamethrin 2.8% E.C. were most compatible for application with *B. lentimorbus* NRRL B-30486, *B. subtilis* NRRL B-30487, and *B. lentimorbus* NRRL B-30488.

It is understood that the foregoing detailed description is given merely by way of illustration and that modification and variations may be made therein.

## Claims

1. A composition useful as bioinoculant, said composition comprising bacterial strains of accession Nos. NRRL B-30486, NRRL B-30487, and NRRL-B 30488, individually or in all possible combinations, and optionally carrier.

2. A composition as claimed in claim 1, wherein the strains NRRL B-30486, and NRRL B-30488 belongs to the group *Bacillus lentimorbus.*

3. A composition as claimed in claim 1, wherein the strain NRRL B-30487 belongs to the group *Bacillus subtilis.*

4. A composition as claimed in claim 1, wherein the strain NRRL B-30486 shows characteristics as shown below:
| Characteristics | NRRL B-30486 |
|---|---|
| Shape | Rods |
| Size | |
| Width, µm | 1.5-2.0 |
| Length, µm | 3.0-6.0 |
| Gram reaction | + |
| Catalase reaction | - |
| Anaerobic growth | + |
| Voges-Proskauer | |
| Reaction | - |
| pH in V-P broth | 5.5 |
| Acid from | |
| D-glucose | + |
| L-arabinose | - |
| D-xylose | - |
| D-mannitol | - |
| Gas from glucose | + |
| Hydrolysis of | |
| Casein | - |
| Gelatin | - |
| Starch | - |
| Use of citrate | - |
| Nitrate to nitrite | - |
| Indole formation | - |
| Growth at pH | |
| in nutrient broth | |
| 6.8 | + |
| 5.7 | + |
| Growth in Nacl | |
| 2% | + |
| 5% | + |
| 7% | + |
| 10% | + |
| Growth at | |
| 30°C | + |
| 40°C | + |
| 50°C | + |
| 55°C | + |
| 65°C | - |

5. A composition as claimed in claim 1, wherein the strain NRRL B-30487 shows characteristics as shown below:
| Characteristics | NRRL B-30487 |
|---|---|
| Shape | Oval |
| Size | |
| Width, µm | 2.5 |
| Gram reaction | + |
| Catalase reaction | + |
| Anaerobic growth | - |
| Voges-Proskauer | |
| Reaction | + |
| pH in V-P broth | 5.8 |
| Acid from | |
| D-glucose | + |
| L-arabinose | + |
| D-xylose | + |
| D-mannitol | + |
| Gas from glucose | - |
| Hydrolysis of | |
| Casein | + |
| Gelatin | + |
| Starch | + |
| Use of citrate | + |
| Nitrate to nitrite | + |
| Indole formation | - |
| Growth at pH | |
| in nutrient broth | |
| 6.8 | + |
| 5.7 | + |
| Growth in Nacl | |
| 2% | + |
| 5% | + |
| 7% | |
| 10% | - |
| Growth at | |
| 30°C | + |
| 40°C | + |
| 50°C | + |
| 55°C | + |
| 65°C | - |

6. A composition as claimed in claim 1, wherein the strain NRRL B-30488 shows characteristics as shown below:
| Characteristics | NRRL B-30488 |
|---|---|
| Shape | Rods |
| Size | |
| Width, µm | 1.5-2.0 |
| Length, µm | 5.0-10.0 |
| Gram reaction | + |
| Catalase reaction | - |
| Anaerobic growth | + |
| Voges-Proskauer | |
| Reaction | - |
| pH in V-P broth | 5.2 |
| Acid from | |
| D-glucose | + |
| L-arabinose | - |
| D-xylose | - |
| D-mannitol | - |
| Gas from glucose | + |
| Hydrolysis of | |
| Casein | - |
| Gelatin | - |
| Starch | - |
| Use of citrate | - |
| Nitrate to nitrite | - |
| Indole formation | - |
| Growth at pH | |
| in nutrient broth | |
| 6.8 | + |
| 5.7 | + |
| Growth in Nacl | |
| 2% | + |
| 5% | + |
| 7% | + |
| 10% | + |
| Growth at | |
| 30°C | + |
| 40°C | + |
| 50°C | + |
| 55°C | + |
| 65°C | - |

7. A composition as claimed in claim 1, wherein carrier is selected from a group comprising vermiculite, charcoal, a mixture of fermented sugar factory sulphitation press mud and distillery spent wash, and sugar factory carbonation press mud.

8. A composition as claimed in claim 1, wherein ratio of three strains is about 1:1:1.

9. A composition as claimed in claim 1, wherein total concentration of strains is 4-10cfu/g of carrier and preferably 6-8 cfu/g of carrier.

10. A composition s claimed in claim 1, wherein concentration of each strain is 4-10cfu/g of carrier and preferably 7-8 cfu/g of carrier.

11. A composition as claimed in claim 1, wherein generation time of the strains is 55-65 minutes at 30°C.

12. A composition as claimed in claim 1, wherein said strains colonize plant roots.

13. A composition as claimed in claim 1, wherein said strains survive all the seasons of the plant.

14. A composition as claimed in claim 1, wherein said strains survive for at least 2/3 years in the composition.

15. An *in vitro* method of isolating bacterial strains of accession nos. NRRL B-30486, NRRL B-30487, and NRRL-B 30488, from the milk of cow 'Sahiwal', said strains having properties, comprising controlling phytopathogenic fungi, promoting plant growth, having tolerance for abiotic stresses, solubilizing phosphate under abiotic stress conditions, producing anti-fungal metabolites, said method comprises steps of:
(a) collecting milk for cow 'Sahiwal',
(b) plating milk on a culture medium,
(c) incubating the culture at temp of 25-35°C, for about 1-3 days,
(d) selecting all morphologically distinct bacteria from culture,
(e) screening said strains selected in step (d) which will suppress phytopathogenic fungi by showing a zone of inhibition of at least 2 mm, by incubating at 30-35°C preferably 28°C, for 20-35 days, preferably 27 days,
(f) screening said strains selected in step (e) for plant growth promotery bacteria showing at least 5% increase in dry weight of plant, by growing plants in the presence of selected bacteria in a concentration of bacteria ranging between about Log 6 to 10 CFU/seed or about Log 6 to 8 CFU/gram of soil,
(g) screening said strains selected in step (f) at 4-8% salt stress tolerance for further selection,
(h) screening said strains selected in step (g) at pH 4-10 stress tolerance for further selection,
(i) screening said strains selected in step (h) at 50-60°C temperature stress tolerance for further selection,
(j) screening said strains selected in step (i) for ability to solubilize phosphate under abiotic stress conditions of high salt, pH, and temperature for further selection, and
(k) isolating the desired three bacterial strains.

16. A method as claimed in claim 15, wherein plant for growth promotery activity is selected from a group comprising *Zea mays, Abelmoschus esculentus, Luffa cylindrica, Lycopersicon esculentum, Abelmoschus esculentus,* and *Cucumis sativus.*

17. A method as claimed in claim 15, wherein culture medium is Nutrient Agar, said medium comprising beef extract (2-10gms), peptone (5-15 gms), sodium chloride (2-10 gms), agar (10-20 gms), distilled water (about 1.0 L), with pH ranging between 7.0-7.4.

18. A method as claimed in claim 15, wherein pH tolerance is tested at 30°C.

19. A method as claimed in claim 15, wherein soil moisture is ranging between 15-30%, preferably 20%.

20. A method as claimed in claim 15, wherein salt is preferably NaCl.

21. A method as claimed in claim 15, wherein the strains are grown on Nutrient Broth (NB) medium consisting of Beef extract (0.5%), peptone (1%), NaCl (0.5%), and distilled water, with pH of the medium is 7.2.

22. A method as claimed in claim 15, wherein pathogenic fungus are selected from a group comprising *F*. *moniliforme, C. falcatum, F. oxysporum* f. sp. *ciceri, R. solani, Pythium* sp., Phoma sorghii, Sclerotium rolfsii, altemaria solani, curvularia lunata, sclerotinia sclerotiorum, and aspergillus niger.

23. A method as claimed in claim 15, wherein concentration of the strains is ranging between 4-10 CFU/ml.

24. A method as claimed in claim 15, wherein phosphate solubilization increases by about 428% upon a combined increase of temperature, salt, and pH.

25. A method as claimed in claim 15, wherein phosphate solubilization increases by about 160% with increase in salt concentration.

26. A method as claimed in claim 15, wherein phosphate solubilization increases by about 130% with increase in pH.

27. A method as claimed in claim 15, wherein strains are selected for high pH stress tolerance at preferably pH 9.

28. A method as claimed in claim 15, wherein strains are selected for 55°C temperature stress tolerance.

29. A method as claimed in claim 15, wherein selecting bacteria demonstrating best results in terms of less seedling mortality, and better seedling germination, plant height, number of pods and seed dry weight.

30. A method as claimed in claim 15, wherein plant promotery activity goes up by 3-400%.

31. A method as claimed in claim 15, wherein concentration of fungi is ranging between 4-7 spores/ml of culture medium.

32. A method as claimed in claim 15, wherein abiotic stress conditions for solubilization of phosphate are selected from a group of conditions comprising high pH ranging between 7-9, high temp ranging between 30-45, and salt concentration ranging between 0.1-4%.

33. A method of preparing plant growth promotery formulation comprising bacterial strains of accession Nos. NRRL B-30486, NRRL B-30487, and NRRL-B 30488, individually or in all possible combinations, and carrier, said method comprising steps of:
(a) growing bacteria in a culture, individually to a concentration of about Log 8 to 11 cfu/ml, preferably log 9 to 10 cfu/ml, optionally followed by mixing the cultures in equal ratio in case of preparing a consortium,
(b) diluting the said culture with water in the ratio of 1:50 to 1:150, preferably 1:100, containing approximately Log 8-9 cfu/ml of bacteria,
(c) spraying about 1-3 liter of the culture/ton of freshly homogenized carrier preferably 2 liter of the culture/ton of freshly homogenized carrier and mixing,
(d) churning the windrows daily at least twice a day for about 2 days, to increase the temperature of the windrows up to 70-75°C,
(e) spraying spent wash or water into the churning windrow for about 40 days to maintain moisture level of about 55-65%,
(f) churning the windrows further for another 3-5 days, now to reduce the moisture and temperature of the fermented product to about 30% and 40-45°C, and
(g) packaging plant growth promoting bioinoculant ready for its application.

34. A method as claimed in claim 33, wherein carrier is selected from a group comprising fresh sulphinated press mud and carbonation press mud.

35. A method as claimed in claim 33, wherein culture medium is NB medium.

36. A method as claimed in claim 33, wherein homogenizing the mixture manually and by using an aero tiller.

37. A method as claimed in claim 33, wherein said formulation demonstrating maximum viability, under varied storage or greenhouse or field condition.

38. A method as claimed in claim 33, wherein ratio of the said strains is about 1:1:1.

39. A method as claimed in claim 33, wherein using said formulation on plants, seeds, and soil.

40. A method of using plant growth promotery formulation comprising bacterial strains of accession Nos. NRRL B-30486, NRRL B-30487, and NRRL-B 30488, individually or in all possible combinations, and carrier, said method comprising steps of applying the said bioinoculant in a liquid or dry form to seeds, plants, and soil.

41. A method as claimed in claim 40, wherein the said bioinoculant also containing the gums or sugars to improve adhesion.

42. A method as claimed in claim 40, wherein the strains are in the ratio of 1:1:1.

43. A method as claimed in claim 40, wherein the said formulation demonstrates maximum viability, under varied storage or greenhouse or field condition.

44. A method as claimed in claim 40, wherein the carrier is selected from a group comprising fresh sulphinated press mud and carbonation press mud.

45. A method as claimed in claim 40; wherein the plants of the variety to be tested for plant growth promotion in the field in the presence of bacteria in a concentration of about Log 7-9 cfu/seed or about Log 6-8 cfu/gram of soil.

46. A method as claimed in claim 40, wherein using formulation alone or in combination with other chemicals which is harmless to the growth and survival of bacteria.

47. A method as claimed in claim 46, wherein the chemicals are selected from a group comprising pesticides, fertilizers, nematicides, and herbicides, with or without for example lime pelleting to limit the severity of the effect of these materials.

48. The method of making a composition useful as bioinoculant, said composition comprising one or more of novel bacterial strains of accession Nos. NRRL B-30486, NRRL B-30487, and NRRL-B 30488 and a carrier, said method comprising steps of:
(a) culturing said bacterial strains in a growth medium to log phase,
(b) diluting the said culture with water in the ratio ranging between 1:10 to 1:100000, with preferable ratio of 1:100,
(c) mixing the said diluted culture with an inert powdered carrier, with the moisture level of the mixture ranging between 20-40 %, preferably about 30% on a wet basis,
(d) incubating the said mixture for at least about two days, maintaining constant moisture level in said mixture,
(e) increasing the bacteria count in the said mixture to a range of about log 4-10 CFU/g of carrier, and
(f) monitoring the survival rate of the bacteria over the period of at least one year in the said composition, wherein the bacterial strains are present preferably in a range from about Log 7 to 9 CFU/g of carrier, showing long survival rate of microbes as inoculate.

49. A method as claimed in claim 48, wherein carrier is selected from a group comprising vermiculite, charcoal, a mixture of fermented sugar factory sulphitation press mud and distillery spent wash, and sugar factory carbonation press mud, rice husk, carboxymethyl cellulose, peat, perlite, talc, and polyvinyl pyrrolidone.

50. A method as claimed in claim 48, wherein preferred carriers are selected from a group comprising vermiculite, charcoal, and fermented press mud.

51. A method as claimed in claim 48, wherein bacterial count is most preferably about Log 8 CFU/g of carrier.

52. A method as claimed in claim 48, wherein plants for growth promotion are selected from a group comprising chickpea, *A. esculentus,* and *C*. *sativus,* and *Z. mays,* and *Triticum aestivum,* and *Glycine max*, and *Pisum sativum,* and *Impatiens balsamina.*

53. A method as claimed in claim 48, wherein ratio of strains is about 1:1:1, in case of a consortium.

54. A method as claimed in claim 48, wherein growth medium is NB medium.

55. A method as claimed in claim 48, wherein growing bacteria individually to a concentration of about Log 9 to 10 CFU/ml followed by mixing the cultures in the ratio of about 1:1:1.

56. A method as claimed in claim 48, wherein diluting the culture with water preferably in the ratio of 1:10, containing approximately Log 8-9 cfu/ml.

57. A method as claimed in claim 48, wherein moisture of the product is regulated with windrows.

## Patentansprüche

1. Als Bioinoculans geeignete Zusammensetzung, wobei die Zusammensetzung bakterielle Stämme mit den Hinterlegungsnummern NRRL B-30486, NRRL B-30487 und NRRL-B-30488 einzeln oder in sämtlichen möglichen Kombinationen und gegebenenfalls einen Träger enthält.

2. Zusammensetzung nach Anspruch 1, wobei die Stämme NRRL B-30486 und NRRL B-30488 zur Gruppe Bacillus lentimorbus gehören.

3. Zusammensetzung nach Anspruch 1, wobei der Stamm NRRL B-30487 zur Gruppe Bacillus subtilis gehört.

4. Zusammensetzung nach Anspruch 1, wobei der Stamm NRRL B-30486 die nachstehend angegebenen Eigenschaften aufweist:
| **Eigenschaften** | **NRRL B-30486** |
|---|---|
| Gestalt | Stäbchen |
| Größe | |
| Breite, µm | 1,5-2,0 0 |
| Länge, µm | 3,0-6,0 0 |
| Gram-Reaktion | + |
| Katalase-Reaktion | - |
| Anaerobes Wachstum | + |
| Voges-Proskauer-Reaktion | - |
| pH-Wert in V-P-Nährlösung | 5,5 |
| Säure aus | |
| D-Glucose | + |
| L-Arabinose | - |
| D-Xylose | - |
| D-Mannit | - |
| Gas aus Glucose | + |
| Hydrolyse von | |
| Casein | - |
| Gelatine | - |
| Stärke | - |
| Verwertung von Citrat | - |
| Nitrat zu Nitrit | - |
| Indol-Bildung | - |
| Wachstum bei pH-Wert in Nährlösung | |
| 6,8 | + |
| 5,7 | + |
| Wachstum in NaCl | |
| 2 % | + |
| 5 % | + |
| 7 % | + |
| 10 % | + |
| Wachstum bei | |
| 30 °C | + |
| 40 °C | + |
| 50 °C | + |
| 55 °C | + |
| 65 °C | - |

5. Zusammensetzung nach Anspruch 1, wobei der Stamm NRRL B-30487 die nachstehend angegebenen Eigenschaften aufweist:
| **Eigenschaften** | **NRRL B-30487** |
|---|---|
| Gestalt | oval |
| Größe | |
| Breite, µm | 2,5 |
| Gram-Reaktion | + |
| Katalase-Reaktion | + |
| Anaerobes Wachstum | - |
| Voges-Proskauer-Reaktion | + |
| pH-Wert in V-P-Nährlösung | 5,8 |
| Säure aus | |
| D-Glucose | + |
| L-Arabinose | + |
| D-Xylose | + |
| D-Mannit | + |
| Gas aus Glucose | - |
| Hydrolyse von | |
| Casein | + |
| Gelatine | + |
| Stärke | + |
| Verwertung von Citrat | + |
| Nitrat zu Nitrit | + |
| Indol-Bildung | - |
| Wachstum bei pH-Wert in Nährlösung | |
| 6,8 | + |
| 5,7 | + |
| Wachstum in NaCl | |
| 2 % | + |
| 5 % | + |
| 7 % | - |
| 10 % | - |
| Wachstum bei | |
| 30 °C | + |
| 40 °C | + |
| 50 °C | + |
| 55 °C | + |
| 65 °C | - |

6. Zusammensetzung nach Anspruch 1, wobei der Stamm NRRL B-30488 die nachstehend angegebenen Eigenschaften aufweist:
| **Eigenschaften** | **NRRL B-30488** |
|---|---|
| Gestalt | Stäbchen |
| Größe | |
| Breite, µm | 1,5-2,0 |
| Länge, µm | 5,0-10,0 |
| Gram-Reaktion | + |
| Katalase-Reaktion | - |
| Anaerobes Wachstum | + |
| Voges-Proskauer-Reaktion | - |
| pH-Wert in V-P-Nährlösung | 5,2 |
| Säure aus | |
| D-Glucose | + |
| L-Arabinose | - |
| D-Xylose | - |
| D-Mannit | - |
| Gas aus Glucose | + |
| Hydrolyse von | |
| Casein | - |
| Gelatine | - |
| Stärke | - |
| Verwertung von Citrat | - |
| Nitrat zu Nitrit | - |
| Indol-Bildung | - |
| Wachstum bei pH-Wert in Nährlösung | |
| 6,8 | + |
| 5,7 | + |
| Wachstum in NaCl | |
| 2 % | + |
| 5 % | + |
| 7 % | + |
| 10 % | + |
| Wachstum bei | |
| 30 °C | + |
| 40 °C | + |
| 50 °C | + |
| 55 °C | + |
| 65 °C | - |

7. Zusammensetzung nach Anspruch 1, wobei der Träger aus einer Gruppe ausgewählt ist, die Vermiculit, Aktivkohle, ein Gemisch von fermentiertem Sulfitierungspressschlamm von Zuckerfabriken mit gebrauchter Waschflüssigkeit von Destillerien und Carbonierungspressschlamm von Zuckerfabriken umfasst.

8. Zusammensetzung nach Anspruch 1, wobei das Verhältnis der drei Stämme etwa 1:1:1 beträgt.

9. Zusammensetzung nach Anspruch 1, wobei die Gesamtkonzentration der Stämme 4-10 KBE/g Träger und vorzugsweise 6-8 KBE/g Träger beträgt.

10. Zusammensetzung nach Anspruch 1, wobei die Konzentration der einzelnen Stämme 4-10 KBE/g Träger und vorzugsweise 7-8 KBE/g Träger beträgt.

11. Zusammensetzung nach Anspruch 1, wobei die Generationszeit der Stämme 55-65 Minuten bei 30 °C beträgt.

12. Zusammensetzung nach Anspruch 1, wobei die Stämme Pflanzenwurzeln kolonisieren.

13. Zusammensetzung nach Anspruch 1, wobei die Stämme jede Saison der Pflanze überleben.

14. Zusammensetzung nach Anspruch 1, wobei die Stämme mindestens zwei/drei Jahre in der Zusammensetzung überleben.

15. In vitro-Verfahren zum Isolieren bakterieller Stämme der Hinterlegungsnummern NRRL B-30486, NRRL B-30487 und NRRL-B 30488 aus der Milch der "Sahiwal"-Kuh, wobei die Stämme Eigenschaften aufweisen, die das Kontrollieren von phytopathogenen Pilzen, die Förderung des Pflanzenwachstums, Toleranz gegen abiotische Stressfaktoren, Solubilisierung von Phosphat unter abiotischen Stresszuständen und Erzeugung von antimykotischen Metaboliten umfassen, wobei das Verfahren die folgenden Stufen umfasst:
(a) Gewinnen von Milch der "Sahiwal"-Kuh,
(b) Ausstreichen der Milch auf einem Kulturmedium,
(c) etwa 1-3-tägiges Inkubieren der Kultur bei Temperaturen von 25-35 °C,
(d) Auswählen sämtlicher morphologisch unterschiedlicher Bakterien aus der Kultur,
(e) Screening von in Stufe (d) ausgewählten Stämmen, die phytopathogene Pilze unterdrücken, indem sie eine Hemmzone von mindestens 2 mm bei einer Inkubation bei 30-35 °C und vorzugsweise 28 °C für eine Zeitspanne von 20-35 Tagen und vorzugsweise von 27 Tagen zeigen,
(f) Screening von in Stufe (e) ausgewählten Stämmen auf das Pflanzenwachstum fördernde Bakterien, die eine mindestens 5 %-ige Zunahme des Pflanzentrockengewichts zeigen, durch Züchten von Pflanzen in Gegenwart von ausgewählten Bakterien bei einer Bakterienkonzentration von etwa log 6 bis 10 KBE/Samen oder etwa log 6 bis 8 KBE/g Erdreich,
(g) Screening von in Stufe (f) ausgewählten Stämmen bei 4-8 % Salzstresstoleranz für die weitere Selektion,
(h) Screening von in Stufe (g) ausgewählten Stämmen beim pH-Wert 4-10 auf Stresstoleranz für die weitere Selektion,
(i) Screening von in Stufe (h) ausgewählten Stämmen bei 50-60 °C auf Temperaturstresstoleranz für die weitere Selektion,
(j) Screening von in Stufe (i) ausgewählten Stämmen auf die Fähigkeit zur Solubilisierung von Phosphat unter abiotischen Stressbedingungen bei hohem Salzgehalt, pH-Wert und Temperatur zur weiteren Selektion und
(k) Isolieren der erwünschten drei Bakterienstämme.

16. Verfahren nach Anspruch 15, wobei die Pflanze für die wachstumsfördernde Aktivität aus der Gruppe, die Zea mays, Abelmoschus esculentus, Luffa cylindrica, Lycopersicon esculentum, Abelmoschus esculentus und Cucumis sativus umfasst, ausgewählt wird.

17. Verfahren nach Anspruch 15, wobei es sich beim Kulturmedium um Nähragar handelt, wobei das Medium Rindfleischextrakt (2-10 g), Pepton (5-15 g), Natriumchlorid (2-10 g), Agar (10-20 g) und destilliertes Wasser (etwa 1,0 Liter) bei einem pH-Wert von 7,0-7,4 umfasst.

18. Verfahren nach Anspruch 15, wobei die pH-Toleranz bei 30 °C getestet wird.

19. Verfahren nach Anspruch 15, wobei die Erdreichfeuchtigkeit 15-30 % und vorzugsweise 20 % beträgt.

20. Verfahren nach Anspruch 15, wobei es sich beim Salz vorzugsweise um NaCl handelt.

21. Verfahren nach Anspruch 15, wobei die Stämme auf Nährlösungs (NB)-Medium gezüchtet werden, das aus Rindfleischextrakt (0,5 %), Pepton (1 %), NaCl (0,5 %) und destilliertem Wasser besteht, wobei der pH-Wert des Mediums 7,2 beträgt.

22. Verfahren nach Anspruch 15, wobei der pathogene Pilz aus einer Gruppe ausgewählt ist, die F. moniliforme, C. falcatum, F. oxysporum f. sp. Ciceri, R. solani, Pythium sp., Phoma sorghii, Sclerotium rolfsii, Alternaria solani, Curvularia lunata, Sclereotinia sclerotioirum und Aspergillus niger umfasst.

23. Verfahren nach Anspruch 15, wobei die Konzentration der Stämme im Bereich von 4-10 KBE/ml liegt.

24. Verfahren nach Anspruch 15, wobei die Phosphatsolubilisierung bei einer kombinierten Erhöhung von Temperatur, Salz und pH-Wert um etwa 428 % zunimmt.

25. Verfahren nach Anspruch 15, wobei die Phosphatsolubilisierung bei Erhöhung der Salzkonzentration um etwa 160 % zunimmt.

26. Verfahren nach Anspruch 15, wobei die Phosphatsolubilisierung bei pH-Erhöhung um etwa 130 % zunimmt.

27. Verfahren nach Anspruch 15, wobei die Stämme auf hohe pH-Stresstoleranz bei einem pH-Wert von vorzugsweise 9 ausgewählt werden.

28. Verfahren nach Anspruch 15, wobei die Stämme auf Temperaturstresstoleranz bei 55 °C ausgewählt werden.

29. Verfahren nach Anspruch 15, wobei Bakterien ausgewählt werden, die die günstigsten Ergebnisse in bezug auf eine geringere Sämlingsmortalität und eine bessere Sämlingskeimung, Pflanzenhöhe, Anzahl von Schoten und Samentrockengewicht zeigen.

30. Verfahren nach Anspruch 15, wobei die den Pflanzenwuchs fördernde Aktivität um 3-400 % steigt.

31. Verfahren nach Anspruch 15, wobei die Pilzkonzentration 4-7 Sporen/ml Kulturmedium beträgt.

32. Verfahren nach Anspruch 15, wobei die abiotischen Stressbedingungen für die Solubilisierung von Phosphat aus einer Gruppe von Bedingungen ausgewählt werden, die einen hohen pH-Wert im Bereich von 7-9, hohe Temperaturen im Bereich von 30-45 °C und eine Salzkonzentration im Bereich von 0,1-4 % umfassen.

33. Verfahren zur Herstellung einer den Pflanzenwuchs fördernden Zubereitung, umfassend bakterielle Stämme mit den Hinterlegungsnummern NRRL B-30486, NRRL B-30487 und NRRL-B 30488 einzeln oder in sämtlichen möglichen Kombinationen und einen Träger, wobei das Verfahren die folgenden Stufen umfasst:
(a) das Züchten von Bakterien in einer Kultur in individueller Weise mit einer Konzentration von etwa log 8 bis 11 KBE/ml und vorzugsweise log 9 bis 10 KBE/ml, gegebenenfalls gefolgt von einem Vermischen der Kulturen in einem gleichen Verhältnis im Fall der Herstellung einer Kombination,
(b) Verdünnen der Kultur mit Wasser im Verhältnis 1:50 bis 1:150 und vorzugsweise von 1:100, wobei etwa log 8-9 KBE/ml Bakterien enthalten sind,
(c) das Versprühen von etwa 1-3 Liter der Kultur/Tonne frisch homogenisiertem Träger und vorzugsweise 2 Liter der Kultur/Tonne frisch hergestelltem Träger und das Vermischen,
(d) das Aufrühren der Schwaden mindestens zweimal täglich für etwa 2 Tage, um die Temperatur der Schwaden auf 70-75 °C zu erhöhen,
(e) das Sprühen von gebrauchter Waschflüssigkeit oder von Wasser, in die aufgerührten Schwaden für etwa 40 Tage, um einen Feuchtigkeitsgrad von etwa 55-65 °C aufrechtzuerhalten,
(f) das weitere Aufrühren der Schwaden für weitere 3-5 Tage, um nunmehr die Feuchtigkeit und die Temperatur des fermentierten Produkts auf etwa 30 % bzw. 40-45 % zu verringern, und
(g) das Abpacken des gebrauchsfertigen, das Pflanzenwachstum fördernden Bioinoculans.

34. Verfahren nach Anspruch 33, wobei der Träger aus der Gruppe ausgewählt wird, die frisch sulfinierten Pressschlamm und Carbonisierungspressschlamm umfasst.

35. Verfahren nach Anspruch 33, wobei es sich bei der Kultur um ein NB-Medium handelt.

36. Verfahren nach Anspruch 33, wobei die Homogenisierung des Gemisches manuell und unter Verwendung eines "Aero-Tillers" erfolgt.

37. Verfahren nach Anspruch 33, wobei die Zubereitung unter variierten Lagerungs- oder Gewächshaus- oder Feldbedingungen eine maximale Lebensfähigkeit zeigt.

38. Verfahren nach Anspruch 33, wobei das Verhältnis der Stämme etwa 1:1:1 beträgt.

39. Verfahren nach Anspruch 33, wobei die Zubereitung auf Pflanzen, Samen und Erdreich angewendet wird.

40. Verfahren zur Verwendung einer den Pflanzenwuchs fördernden Zubereitung, umfassend bakterielle Stämme mit den Hinterlegungsnummern NRRL B-30486, NRRL B-30487 und NRRL-B 30488 einzeln oder in sämtlichen möglichen Kombinationen und einen Träger, wobei das Verfahren die Stufe des Auftragens des Bioinoculans in flüssiger oder trockener Form auf Samen, Pflanzen und Erdreich umfasst.

41. Verfahren nach Anspruch 40, wobei das Bioinoculans ferner Gummi oder Zucker zur Verbesserung der Haftung umfasst.

42. Verfahren nach Anspruch 40, wobei die Stämme im Verhältnis von 1:1:1 vorliegen.

43. Verfahren nach Anspruch 40, wobei die Zubereitung unter variierten Lagerungs- oder Gewächshaus- oder Feldbedingungen eine maximale Lebensfähigkeit aufweist.

44. Verfahren nach Anspruch 40, wobei der Träger aus einer Gruppe ausgewählt wird, die frisch sulfinierten Pressschlamm und Carbonisierungspressschlamm umfasst.

45. Verfahren nach Anspruch 40, wobei die Pflanzen der Varietät auf die Förderung von Pflanzenwachstum auf dem Feld in Gegenwart von Bakterien in einer Konzentration von etwa log 7-9 KBE/Samen oder etwa log 6-8 KBE/g Erdreich getestet werden.

46. Verfahren nach Anspruch 40, wobei eine Zubereitung allein oder in Kombination mit anderen Chemikalien, die für das Wachstum und das Überleben von Bakterien unschädlich sind, verwendet wird.

47. Verfahren nach Anspruch 46, wobei die Chemikalien aus einer Gruppe ausgewählt werden, die Pestizide, Düngemittel, Nematizide und Herbizide umfasst, wobei gegebenenfalls eine Kalk-Pelletisierung vorgenommen wird, um die Schwere der Wirkung dieser Materialien zu begrenzen.

48. Verfahren zur Herstellung einer Zusammensetzung, die sich als Bioinoculans eignet, wobei die Zusammensetzung einen oder mehrere der neuen Bakterienstämme mit den Hinterlegungsnummern NRRL B-30486, NRRL B-30487 und NRRL-B 30488 und einen Träger umfasst, wobei das Verfahren die folgenden Stufen umfasst:
(a) das Züchten der bakteriellen Stämme in einem Wachstumsmedium bis zur logarithmischen Phase,
(b) das Verdünnen der Kultur mit Wasser im Verhältnis 1:10 bis 1:100 000 und vorzugsweise von 1:100,
(c) das Vermischen der verdünnten Kulturen mit einem inerten pulverisierten Träger, wobei der Feuchtigkeitsgehalt des Gemisches 1 zwischen 20-40 % und vorzugsweise etwa 30 %, bezogen auf eine feuchte Basis, beträgt,
(d) das Inkubieren des Gemisches für mindestens etwa 2 Tage, wobei im Gemisch ein konstanter Feuchtigkeitsgehalt aufrechterhalten wird,
(e) das Erhöhen der Bakterienzahl im Gemisch auf einen Bereich von etwa log 4-10 KBE/g Träger und
(f) das Überwachen der Überlebensrate der Bakterien über einen Zeitraum von mindestens 1 Jahr in der Zusammensetzung, wobei die Bakterienstämme vorzugsweise in einem Bereich von etwa log 7 bis 9 KBE/g Träger vorhanden sind und eine lange Überlebensrate der Mikroorganismen als Inokulat zeigen.

49. Verfahren nach Anspruch 48, wobei der Träger aus einer Gruppe ausgewählt wird, die Vermiculit, Aktivkohle, ein Gemisch aus fermentiertem Sulfitierungspressschlamm von Zuckerfabriken und gebrauchter Waschflüssigkeit von Destillerien, sowie Carbonisierungspressschlamm von Zuckerfabriken, Reisspelzen, Carboxymethylcellulose, Torf, Perlit, Talkum und Polyvinylpyrrolidon umfasst.

50. Verfahren nach Anspruch 48, wobei die bevorzugten Träger aus einer Gruppe ausgewählt werden, die Vermiculit, Aktivkohle und fermentierten Pressschlamm umfasst.

51. Verfahren nach Anspruch 48, wobei die Bakterienzahl vorzugsweise etwa log 8 KBE/g Träger beträgt.

52. Verfahren nach Anspruch 48, wobei die Pflanzen für die Wachstumsförderung aus einer Gruppe ausgewählt werden, die Kichererbsen, A. esculentus und C. sativus und Z. mays und Triticum aestivum und Glycine max und Pisum sativum und Impatiens balsamina umfasst.

53. Verfahren nach Anspruch 48, wobei das Verhältnis der Stämme im Falle einer Kombination etwa 1:1:1 beträgt.

54. Verfahren nach Anspruch 48, wobei es sich beim Wachstumsmedium um NB-Medium handelt.

55. Verfahren nach Anspruch 48, wobei die Bakterien individuell bis zu einer Konzentration von etwa log 9 bis 10 KBE/ml gezüchtet werden, wonach das Vermischen der Kulturen im Verhältnis von etwa 1:1:1 erfolgt.

56. Verfahren nach Anspruch 48, wobei das Verdünnen der Kultur mit Wasser vorzugsweise im Verhältnis von 1:10 mit einem Gehalt an etwa log 8-9 KBE/ml erfolgt.

57. Verfahren nach Anspruch 48, wobei die Feuchtigkeit des Produkts mit Schwaden reguliert wird.

## Revendications

1. Composition utile comme bio-inoculant, ladite composition comprenant des souches bactériennes de numéros de dépôt NRRL B-30486, NRRL B-30487 et NRRL-B 30488, individuellement ou dans toutes les combinaisons possibles, et éventuellement un support.

2. Composition selon la revendication 1 où les souches NRRL B-30486 et NRRL B-30488 appartiennent au groupe *Bacillus lentimorbus*

3. Composition selon la revendication 1 où la souche NRRL B-30487 appartient au groupe *Bacillus subtilis.*

4. Composition selon la revendication 1 où la souche NRRL B-30486 présente les caractéristiques telles que montrées ci-dessous :
| Caractéristiques | NRRL B-30486 |
|---|---|
| Forme | Bâtonnets |
| Taille | |
| Largeur, µm | 1,5-2,0 |
| Longueur, µm | 3,0-6,0 |
| Réaction Gram | + |
| Réaction avec la catalase | - |
| Croissance anaérobie | + |
| Réaction de Voges-Proskauer | - |
| pH dans du bouillon V-P | 5,5 |
| Acide de | |
| D-glucose | + |
| L-arabinose | - |
| D-xylose | - |
| D-mannitol | - |
| Gaz du glucose | + |
| Hydrolyse de | |
| Caséine | - |
| Gélatine | - |
| Amidon | - |
| Utilisation du citrate | - |
| Nitrate en nitrite | - |
| Formation d'indole | - |
| Croissance à pH dans du bouillon nutritif | |
| 6,8 | + |
| 5,7 | + |
| Croissance dans NaCl | |
| 2% | + |
| 5% | + |
| 7% | + |
| 10% | + |
| Croissance à | |
| 30°C | + |
| 40°C | + |
| 50°C | + |
| 55°C | + |
| 65°C | - |

5. Composition selon la revendication 1 où la souche NRRL B-30487 présente les caractéristiques telles que montrées ci-dessous :
| Caractéristiques | NRRL B-30487 |
|---|---|
| Forme | Ovale |
| Taille | |
| Largeur, µm | 2,5 |
| Réaction Gram | + |
| Réaction avec la catalase | + |
| Croissance anaérobie | |
| Réaction de Voges-Proskauer | + |
| pH dans du bouillon V-P | 5,8 |
| Acide de | |
| D-glucose | + |
| L-arabinose | + |
| D-xylose | + |
| D-mannitol | + |
| Gaz du glucose | - |
| Hydrolyse de | |
| Caséine | + |
| Gélatine | + |
| Amidon | + |
| Utilisation du citrate | + |
| Nitrate en nitrite | + |
| Formation d'indole | - |
| Croissance à pH dans du bouillon nutritif | |
| 6,8 | + |
| 5,7 | + |
| Croissance dans NaCl | |
| 2% | + |
| 5% | + |
| 7% | - |
| 10 % | - |
| Croissance à | |
| 30°C | + |
| 40°C | + |
| 50°C | + |
| 55°C | + |
| 65°C | - |

6. Composition selon la revendication 1 où la souche NRRL B-30488 présente les caractéristiques telles que montrées ci-dessous :
| Caractéristiques | NRRL B-30488 |
|---|---|
| Forme | bâtonnets |
| Taille | |
| Largeur, µm | 1,5-2,0 |
| Longueur, µm | 5,0-10,0 |
| Réaction Gram | + |
| Réaction avec la catalase | - |
| Croissance anaérobie | + |
| Réaction de Voges-Proskauer | - |
| pH dans du bouillon V-P | 5,2 |
| Acide de | |
| D-glucose | + |
| L-arabinose | - |
| D-xylose | - |
| D-mannitol | - |
| Gaz du glucose | + |
| Hydrolyse de | |
| Caséine | - |
| Gélatine | - |
| Amidon | - |
| Utilisation du citrate | - |
| Nitrate en nitrite | - |
| Formation d'indole | - |
| Croissance à pH dans du bouillon nutritif | |
| 6,8 | + |
| 5,7 | + |
| Croissance dans NaCl | |
| 2% | + |
| 5 % | + |
| 7% | + |
| 10 % | + |
| Croissance à | |
| 30°C | + |
| 40°C | ⁺ |
| 50°C | + |
| 55°C | + |
| 65°C | - |

7. Composition selon la revendication 1 où le support est choisi dans un groupe comprenant la vermiculite, le charbon, un mélange de boue de presse de sulfitation de sucrerie fermentée et de produit de lavage usé de distillerie, et de boue de presse de carbonatation de sucrerie.

8. Composition selon la revendication 1 où le rapport des trois souches est environ 1:1:1.

9. Composition selon la revendication 1 où la concentration totale des souches est 4-10 cfu/g de support et de préférence 6-8 cfu/g de support.

10. Composition selon la revendication 1 où la concentration de chaque souche est 4-10 cfu/g de support et de préférence 7-8 cfu/g de support.

11. Composition selon la revendication 1 où le temps de production des souches est 55-65 min à 30°C.

12. Composition selon la revendication 1 où lesdites souches colonisent les racines des plantes.

13. Composition selon la revendication 1 où lesdites souches survivent à toutes les saisons de la plante.

14. Composition selon la revendication 1 où lesdites souches survivent pendant au moins deux tiers d'années dans la composition.

15. Procédé *in vitro* d'isolement de souches bactériennes de numéros de dépôt NRRL B-30486, NRRL B-30487 et NRRL-B 30488 du lait de vache "Sahiwal", lesdites souches ayant des propriétés, comprenant la maîtrise des champignons phytopathogènes, la promotion de la croissance des plantes, ayant une tolérance pour les stress abiotiques, la dissolution du phosphate dans des conditions de stress abiotique, la production de métabolites anti-fongiques, ledit procédé comprend les étapes de :
(a) collecte de lait de vache "Sahiwal",
(b) étalement du lait sur un milieu de culture,
(c) incubation de la culture à une température de 25-35°C pendant environ 1-3 jours,
(d) sélection de toutes les bactéries morphologiquement distinctes à partir de la culture,
(e) criblage desdites souches sélectionnées dans l'étape (d) qui supprimeront les champignons phytopathogènes en présentant une zone d'inhibition d'au moins 2 mm, par incubation à 30-35°C de préférence 28°C, pendant 20-35 jours, de préférence 27 jours,
(f) criblage desdites souches choisies dans l'étape (e) pour les bactéries favorisant la croissance des plantes présentant au moins 5 % d'augmentation de masse sèche de plantes, par culture de plantes en présence de bactéries sélectionnées à une concentration de bactéries allant d'environ Log 6 à 10 CFU/graine ou d'environ Log 6 à 8 CFU/gramme de sol,
(g) criblage desdites souches choisies dans l'étape (f) à une tolérance au stress de sel à 4-8 % en vue d'une sélection supplémentaire,
(h) criblage desdites souches choisies dans l'étape (g) à une tolérance au stress de pH 4-10 en vue d'une sélection supplémentaire,
(i) criblage desdites souches choisies dans l'étape (h) à une tolérance au stress de température de 50-60°C en vue d'une sélection supplémentaire,
(j) criblage desdites souches sélectionnées dans l'étape (i) pour l'aptitude à dissoudre le phosphate dans des conditions de stress abiotique de sel, pH et température élevés en vue d'une sélection supplémentaire, et
(k) isolement des trois souches bactériennes souhaitées.

16. Procédé selon la revendication 15 où la plante pour l'activité favorisant la croissance est choisie dans un groupe comprenant *Zea mays, Abelmoschus esculentus, Luffa cylindrica, Lycopersicon esculentum, Abelmoschus esculentus* et *Cucumis sativus.*

17. Procédé selon la revendication 15 où le milieu de culture est Nutrient Agar, ledit milieu comprenant de l'extrait de boeuf (2-10 g), de la peptone (5-15 g), du chlorure de sodium (2-10 g), de la gélose (10-20 g), de l'eau distillée (environ 1,0 L), avec un pH allant de 7,0-7,4.

18. Procédé selon la revendication 15 où la tolérance au pH est testée à 30°C.

19. Procédé selon la revendication 15 où l'humidité du sol va de 15-30 %, de préférence 20 %.

20. Procédé selon la revendication 15 où le sel est de préférence NaCl.

21. Procédé selon la revendication 15 où les souches sont cultivées sur du milieu Nutrient Broth (NB) consistant en extrait de boeuf (0,5 %), peptone (1 %), NaCl (0,5 %) et eau distillée, le pH du milieu étant 7,2.

22. Procédé selon la revendication 15 où les champignons pathogènes sont choisis dans un groupe comprenant *F, moniliforme, C. falcatum, F. oxysporum* f. sp. *ciceri, R. solani, Pythium* sp., *Phoma sorghii, Sclerotium rolfsii, alternaria solani, curvularia lunata, sclerotinia sclerotiorum* et *aspergillus niger.*

23. Procédé selon la revendication 15 où la concentration des souches est de 4-10 CFU/ml.

24. Procédé selon la revendication 15 où la dissolution du phosphate augmente d'environ 428 % lors d'une augmentation combinée de la température, du sel et du pH.

25. Procédé selon la revendication 15 où la dissolution du phosphate augmente d'environ 160 % avec une augmentation de la concentration de sel.

26. Procédé selon la revendication 15 où la dissolution du phosphate augmente d'environ 130 % avec une augmentation du pH.

27. Procédé selon la revendication 15 où les souches sont choisies pour une haute tolérance à un stress de pH, de préférence à pH 9.

28. Procédé selon la revendication 15 où les souches sont choisies pour une tolérance à un stress de température de 55°C.

29. Procédé selon la revendication 15 où la sélection de bactéries présentant les meilleurs résultats en termes de moindre mortalité des plants, et de meilleure germination des plants, de hauteur des plantes, de nombre de gousses et de masse sèche des graines.

30. Procédé selon la revendication 15 où l'activité favorisant les plantes augmente de 3-400 %.

31. Procédé selon la revendication 15 où la concentration des champignons est de 4-7 spores/ml de milieu de culture.

32. Procédé selon la revendication 15 où les conditions de stress abiotique pour la dissolution du phosphate sont choisies dans un groupe de conditions comprenant un pH élevé allant de 7 à 9, une température élevée allant de 30 à 45, et une concentration de sel allant de 0,1 à 4 %.

33. Procédé de préparation d'une formulation favorisant la croissance des plantes comprenant des souches bactériennes des numéros de dépôt NRRL B-30486, NRRL B-30487 et NRRL B-30488, individuellement ou dans toutes les combinaisons possibles, et un support, ledit procédé comprenant les étapes de :
a) croissance de bactéries dans une culture, individuellement jusqu'à une concentration d'environ Log 8 à 11 cfu/ml, de préférence Log 9 à 10 cfu/ml, éventuellement suivie par un mélange des cultures dans des proportions égales dans le cas de la préparation d'un consortium,
b) dilution de ladite culture avec de l'eau dans le rapport de 1:50 à 1:150, de préférence 1:100, contenant approximativement Log 8-9 cfu/ml de bactéries,
c) pulvérisation d'environ 1-3 litres de culture/tonne de support fraîchement homogénéisé, de préférence 2litres de culture/tonne de support fraîchement homogénéisé et mélange,
d) brassage des andains quotidiennement au moins deux fois par jour pendant environ 2 jours, pour augmenter la température des andains jusqu'à 70-75°C,
e) pulvérisation de produit de lavage usé ou d'eau dans l'andain de brassage pendant environ 40 jours pour maintenir un niveau d'humidité d'environ 55-65 %,
f) brassage supplémentaire des andains pendant encore 3-5 jours, maintenant pour réduire l'humidité et la température du produit fermenté à environ 30 % et 40-45°C, et
g) conditionnement du bio-inoculant favorisant la croissance des plantes prêt pour son application.

34. Procédé selon la revendication 33 où le support est choisi dans un groupe comprenant de la boue de presse sulfitée fraîche et de la boue de presse de carbonatation.

35. Procédé selon la revendication 33 où le milieu de culture est du milieu NB.

36. Procédé selon la revendication 33 où l'homogénéisation du mélange manuellement et par utilisation d'un aérocultivateur.

37. Procédé selon la revendication 33 où ladite formulation présentant une viabilité maximale, dans différentes conditions de stockage ou en serre ou en champ.

38. Procédé selon la revendication 33 où le rapport desdites souches est d'environ 1:1:1.

39. Procédé selon la revendication 33 où l'utilisation de ladite formulation sur des plantes, des graines et du sol.

40. Procédé d'utilisation d'une formulation favorisant la croissance des plantes comprenant des souches bactériennes des numéros de dépôt NRRL B-30486, NRRL B-30487 et NRRL B-30488, individuellement ou dans toutes les combinaisons possibles, et un support, ledit procédé comprenant les étapes d'application dudit bio-inoculant dans une forme liquide ou sèche à des graines, des plantes et du sol.

41. Procédé selon la revendication 40 où ledit bio-inoculant contenant aussi les gommes ou sucres pour améliorer l'adhésion.

42. Procédé selon la revendication 40 où les souches sont dans le rapport de 1:1:1.

43. Procédé selon la revendication 40 où ladite formulation présente une viabilité maximale dans différentes conditions de stockage ou en serre ou en champ.

44. Procédé selon la revendication 40 où le support est choisi dans un groupe comprenant de la boue de presse sulfitée fraîche et de la boue de presse de carbonatation.

45. Procédé selon la revendication 40 où les plantes de la variété destinée à être testée pour la promotion de la croissance des plantes dans le champ en présence de bactéries en une concentration d'environ Log 7-9 cfu/graine ou d'environ Log 6-8 cfu/gramme de sol.

46. Procédé selon la revendication 40 où l'utilisation de la formulation seule ou en combinaison avec d'autres produits chimiques qui est inoffensive pour la croissance et la survie des bactéries.

47. Procédé selon la revendication 46 où les produits chimiques sont choisis dans un groupe comprenant les pesticides, les engrais, les nématicides et les herbicides, avec ou sans, par exemple, enrobage à la chaux pour limiter la sévérité de l'effet de ces produits.

48. Procédé de production d'une combinaison utile comme bio-Inoculant, ladite composition comprenant une ou plusieurs souches parmi de nouvelles souches bactériennes des numéros de dépôt NRRL B-30486, NRRL B-30487 et NRRL B-30488 et un support, ledit procédé comprenant les étapes de :
(a) culture desdites souches bactériennes dans un milieu de croissance jusqu'à la phase log,
(b) dilution de ladite culture avec de l'eau dans le rapport allant de 1:10 à 1:100 000, avec un rapport préférable de 1:100,
(c) mélange de ladite culture diluée avec un support pulvérulent inerte, le niveau d'humidité du mélange étant de 20-40 %, de préférence d'environ 30 % sur une base humide,
(d) incubation dudit mélange pendant au moins environ 2 jours, en maintenant un niveau d'humidité constant dans ledit mélange,
(e) augmentation du nombre de bactéries dans ledit mélange jusqu'à une plage d'environ log 4-10 CFU/g de support, et
(f) surveillance du taux de survie des bactéries sur une période d'au moins une année dans ladite composition, où les souches bactériennes sont présentes de préférence dans une plage d'environ Log 7 à 9 CFU/g de support, présentant un long taux de survie des microbes sous forme d'inoculum.

49. Procédé selon la revendication 48 où le support est choisi dans un groupe comprenant la vermiculite, le charbon, un mélange de boue de presse de sulfitation de sucrerie fermentée et de produit de lavage usé de distillerie, et la boue de presse de carbonatation de sucrerie, l'enveloppe de riz, la carboxyméthylcellulose, la tourbe, la perlite, le talc et la polyvinylpyrrolidone.

50. Procédé selon la revendication 48 où les supports préférés sont choisis dans un groupe comprenant la vermiculite, le charbon et la boue de presse fermentée.

51. Procédé selon la revendication 48 où le nombre de bactéries est de manière particulièrement préférable d'environ Log 8 CFU/g de support.

52. Procédé selon la revendication 48 où les plantes pour la promotion de la croissance sont choisies dans un groupe comprenant le pois chiche, *A. esculentus* et *C. sativus,* et *Z. mays* et *Triticum aestivum,* et *Glycine max* et *Pisum sativum,* et *Impatiens balsamina.*

53. Procédé selon la revendication 48 où le rapport des souches est d'environ 1:1:1, dans le cas d'un consortium.

54. Procédé selon la revendication 48 où le milieu de croissance est du milieu NB.

55. Procédé selon la revendication 48 où la croissance de bactéries individuellement jusqu'à une concentration d'environ Log 9 à 10 CFU/ml suivie par le mélange des cultures dans le rapport d'environ 1:1:1.

56. Procédé selon la revendication 48 où la dilution de la culture avec de l'eau de préférence dans le rapport de 1 :10, contenant approximativement Log 8-9 cfu/ml.

57. Procédé selon la revendication 48 où l'humidité du produit est régulée avec des andains.
